# EUROPÄISCHE PATENTSCHRIFT

(11) **EP 4 035 823 B1**
(45) Veröffentlichungstag und Bekanntmachung des Hinweises auf die Patenterteilung: **21.02.2024**
(21) Anmeldenummer: 22156460.2
(22) Anmeldetag: 25.02.2020
(51) Int. Cl.: B23K 26/38, B23K 26/352, B23K 7/00, B23K 9/013

(54) **PROZESS ZUR STRAHLBEARBEITUNG EINES PLATTEN- ODER ROHRFÖRMIGEN WERKSTÜCKS**
PROCESS FOR BEAM PROCESSING OF A PLATE OR TUBULAR WORKPIECE
PROCÉDÉ D'USINAGE PAR FAISCEAU D'UNE PIÈCE TABULAIRE OU TUBULAIRE

(30) Priorität: 25.02.2019 EP 19159234
(43) Veröffentlichungstag der Anmeldung: 03.08.2022
(62) Teilanmeldung aus: 20706277.9
(73) Patentinhaber: WSoptics technologies GmbH, 87675 Rettenbach am Auerberg (DE)
(72) Erfinder: SEPP, Florian, 86972 Altenstadt (DE); WEISS, Christoph, 86971 Peiting (DE)
(74) Vertreter: Gebauer, Dieter Edmund

(56) Entgegenhaltungen:
- WO-A1-2014/016138
- WO-A1-2019/077395
- DE-A1-102014 113 878

## Beschreibung

Die Erfindung liegt auf dem technischen Gebiet der Fertigung metallischer Werkstückteile und betrifft einen Prozess zur Strahlbearbeitung eines platten- oder rohrförmigen Werkstücks, bei dem eine trennende Bearbeitung des Werkstücks zur Erzeugung eines Schnittspalts sowie eine Nachbearbeitung des Werkstücks entlang mindestens eines Teils des Schnittspalts durch einen Bearbeitungsstrahl erfolgt.

Im Handel verfügbare Laserschneidvorrichtungen mit einem verfahrbaren Strahlkopf zur Führung eines Laserstrahls ermöglichen eine automatisierte Fertigung von Werkstückteilen in großer Stückzahl und mit hoher Präzision. Hierbei werden Werkstückteile mittels des Laserstrahls aus einem platten- oder rohrförmigen metallischen Werkstück entlang jeweiliger Schnittlinien ausgeschnitten.

Abhängig von der Art des eingesetzten Laserschneidprozesses benötigen die Schnittkanten der ausgeschnittenen Werkstückteile in aller Regel eine aufwändige mechanische Nachbearbeitung. So sind scharfe Schnittkanten zu runden, beispielsweise mit einer Fase zu versehen, und Grate an den Schnittkanten müssen entfernt werden. Ferner sind die Schnittkanten häufig für einen späteren Bearbeitungsprozess vorzubereiten, beispielsweise durch Glätten oder Aufrauen. Ein Problem stellt auch die beim Laserschneiden mit Sauerstoff als Arbeitsgas an den Schnittkanten auftretende Oxidierung dar. Da sich Oxidschichten meist nur schlecht lackieren lassen, müssen diese durch Abschleifen entfernt werden. Weiterhin ist problematisch, dass bei verzinkten Werkstücken die Zinkbeschichtung im Bereich des Schnittspalts verloren geht, so dass die aus verzinkten Werkstücken gefertigten Werkstückteile entweder nachverzinkt werden müssen, oder eine Verzinkung generell erst an den ausgeschnittenen Werkstückteilen vorgenommen wird.

Grundsätzlich ist die dem vollständigen Ausschneiden eines Werkstückteils nachgelagerte Bearbeitung, insbesondere mechanische Bearbeitung, im Bereich der Schnittkanten zeitlich und meist auch personell sehr aufwändig, zumal sie oft auch manuell erfolgt. Zudem ist die Nachbearbeitung kostenintensiv, so dass sich die Herstellung von Werkstückteilen in unerwünschter Weise verlängert und verteuert.

WO 2014/016138 offenbart ein Verfahren zum Herstellen von Synchronringen. Hierbei werden zwei Synchronringe aus einem Rohling durch einen Laser ausgeschnitten. Anschließend erfolgt ein Laserhärten von Belastungsflächen der ausgeschnittenen Synchronringe mittels eines defokussierten Laserstrahls.

In der nachveröffentlichten WO 2019/077395 ist ein Verfahren zur Herstellung aluminiumbeschichteter Stahlteile offenbart. Hierbei wird zunächst ein Bauteil aus einem beschichteten Band mittels Laser ausgeschnitten, anschließend erfolgt ein teilweises Entfernen der Beschichtung an der Schnittkante des ausgeschnittenen Bauteils mittels Laserablation.

DE 102014113878 A1 offenbart eine Vorrichtung, die zum Laserschneiden und Laserglühen von Bauteilen geeignet ist. Es werden jeweils fertig ausgeschnittene Bauteile einem Laserglühen unterzogen. Die darin gezeigte Neuerung betrifft eine Abschirmung für Streustrahlung.

Demgegenüber besteht die Aufgabe der vorliegenden Erfindung darin, herkömmliche Verfahren zur Herstellung von Werkstückteilen, bei denen Werkstückteile mittels eines Schneidstrahls von einem platten- oder rohrförmigen Werkstück ausgeschnitten werden, so weiterzubilden, dass deren Herstellung in automatisierter Weise schneller und kostengünstiger erfolgen kann.

Diese und weitere Aufgaben werden nach dem Vorschlag der Erfindung durch einen Prozess zur Strahlbearbeitung eines platten- oder rohrförmigen Werkstücks mit den Merkmalen des unabhängigen Patentanspruchs 1 sowie durch eine Strahlbearbeitungsvorrichtung nach Anspruch 12, einen Programmcode nach Anspruch 13 sowie ein computerlesbares Speichermedium nach Anspruch 14 gelöst. Vorteilhafte Ausgestaltungen der Erfindung sind durch die Merkmale der Unteransprüche angegeben.

Erfindungsgemäß ist ein Prozess zur Strahlbearbeitung eines platten- oder rohrförmigen Werkstücks gezeigt. Das erfindungsgemäße Verfahren kann in jedem Prozess eingesetzt werden, bei dem die Erzeugung eines Schnittspalts in einem Werkstück durch einen Schneidstrahl (thermisches Schneiden) erfolgt, beispielsweise Laserschneiden oder Brennschneiden. Vorzugsweise, jedoch nicht zwingend, wird der erfindungsgemäße Prozess beim Laserschneiden eines Werkstücks eingesetzt, wobei der Bearbeitungsstrahl ein Laserstrahl und die Strahlbearbeitung eine Laserstrahlbearbeitung ist.

Da in dem erfindungsgemäßen Prozess, neben einer trennenden Bearbeitung des Werkstücks zur Erzeugung eines Schnittspalts, auch eine nicht-trennende und nicht-fügende Nachbearbeitung des Werkstücks im Bereich des Schnittspalts erfolgt, wird der Begriff "Bearbeitungsstrahl" anstelle von Schneidstrahl verwendet. Es versteht sich, dass der Bearbeitungsstrahl durch Einstellen der Leistungsdichte wahlweise zur trennenden Bearbeitung oder zur nicht-trennenden sowie nicht-fügenden Bearbeitung des Werkstücks eingesetzt werden kann.

Die Strahlbearbeitung des erfindungsgemäßen Prozesses umfasst mindestens eine Trennprozedur zum Erzeugen eines Schnittspalts entlang einer Schnittlinie, sowie mindestens eine Nachbearbeitungsprozedur zum Nachbearbeiten des Werkstücks entlang mindestens eines Teils des Schnittspalts, wobei sich der Begriff "Teil" hier auf die Erstreckung des Schnittspalts entlang der Schnittlinie bezieht.

Im Sinne vorliegender Erfindung wird eine Schnittlinie bzw. ein Schnittspalt betrachtet, die sich ausschließlich entlang der Kontur eines aus dem Werkstück auszuschneidenden Werkstückteils erstrecken. Entlang der Schnittlinie wird ein Schnittspalt erzeugt, wobei sich der Schnittspalt über die komplette Schnittlinie erstreckt. Die Erzeugung des Schnittspalts entlang der Schnittlinie kann in einem oder mehreren Schritten erfolgen. Durch Erzeugen des Schnittspalts wird das Werkstückteil entlang seiner Kontur vollständig ausgeschnitten, d.h. der Schnittspalt ist stets konturbildend. Dementsprechend fallen unter den Begriff Schnittlinie bzw. Schnittspalt im Sinne vorliegender Erfindung keine Abschnitte der Schnittlinie bzw. Schnittspalts, welche nicht konturbildend sind und sich nicht entlang der Kontur eines Werkstückteils erstrecken. Beispielsweise wird beim Ausschneiden eines Werkstückteils häufig auch entfernt von der Kontur in das Werkstück eingestochen und der Schneidstrahl erst ein Stück weit hin zur Kontur des Werkstückteils verfahren. Der hierbei erzeugte Schnittspalt ist nicht konturbildend und fällt somit nicht unter den Begriff Schnittspalt, wie er im Sinne der Erfindung zu verstehen ist.

Obgleich der erfindungsgemäße Prozess zur Strahlbearbeitung eines platten- oder rohrförmigen Werkstücks an einem einzelnen Werkstückteil erläutert wird, versteht es sich, dass in aller Regel eine Vielzahl von Werkstückteilen aus dem Werkstück ausgeschnitten werden, wobei der erfindungsgemäße Prozess für jedes Werkstückteil separat angewendet wird.

Die mindestens eine Trennprozedur des erfindungsgemäßen Prozesses umfasst die trennende Bearbeitung des platten- oder rohrförmigen Werkstücks mittels eines durch einen Strahlkopf geführten Bearbeitungsstrahls, wobei ein (konturbildender) Schnittspalt entlang der Schnittlinie erzeugt wird. Durch die Bestrahlung des Werkstücks mit dem Bearbeitungsstrahl (in Kombination mit einem auf die Schnittfuge gerichteten Arbeitsgas) wird ein Schnittspalt erzeugt, welcher sich entlang der kompletten Kontur des Werkstückteils erstreckt, so dass das Werkstückteil aus dem Werkstück vollständig ausgeschnitten wird, nicht mehr mit dem verbleibenden Werkstück (Restgitter) verbunden ist und somit unmittelbar vom Restgitter entfernt werden kann. Das Freischneiden bzw. Lösen des Werkstückteils vom Werkstück erfolgt durch Erzeugen eines geschlossenen Schnittspalts.

In Einklang hiermit, soll der Begriff "Ausschneiden" im Sinne vorliegender Erfindung das vollständige Ausschneiden eines Werkstückteils aus dem Werkstück umfassen. Weil das Werkstückteil vollständig ausgeschnitten werden soll, erstreckt sich die Schnittlinie und damit auch der Schnittspalt entlang der kompletten Kontur des Werkstückteils. Der Schnittspalt wird, gegebenenfalls in mehreren Schritten, stets entlang der kompletten Schnittlinie erzeugt, so dass sich der Schnittspalt nach der mindestens einen Trennprozedur entlang der kompletten Schnittlinie erstreckt.

Im Sinne vorliegender Erfindung bezeichnet der Begriff "Werkstück" ein platten- oder rohrförmiges, typischer Weise metallisches Bauteil, aus dem mindestens ein Werkstückteil, in aller Regel eine Vielzahl Werkstückteile, hergestellt werden sollen. Das plattenförmige Werkstück ist typischer Weise eben bzw. flach. Für das rohrförmige Werkstück, welches gebogen ist, kann an jeder Stelle der Oberfläche eine Tangentialebene gedanklich konstruiert werden. Das mindestens eine Werkstückteil wird vollständig aus dem Werkstück ausgeschnitten. Ist aus dem Werkstück bereits mindestens ein Werkstückteil vollständig ausgeschnitten, so wird der verbleibende Teil des Werkstücks (ohne vollständig ausgeschnittenes Werkstückteil) als Restgitter bezeichnet.

Ein vollständig ausgeschnittenes und vom Restgitter entferntes Werkstückteil wird nicht einer Nachbearbeitung im Rahmen des erfindungsgemäßen Prozesses unterzogen. Ein vollständig vom Restgitter ausgeschnittenes Werkstückteil, das keiner Nachbearbeitung im Rahmen des erfindungsgemäßen Prozesses unterzogen wird, ist typischer Weise ein Abfallteil. Das vollständige ausgeschnittene Abfallteil kann beispielsweise eine Durchbrechung in einem Gutteil erzeugen.

Die Energiedichte des Bearbeitungsstrahls gibt die Energie des Bearbeitungsstrahls in Bezug auf die vom Bearbeitungsstrahl bestrahlte Fläche an, beispielsweise bemessen in J/mm². Relevant für die Erzeugung des Schnittspalts und die Nachbearbeitung des Werkstücks entlang des Schnittspalts ist die Energiedichte in Bezug auf das Zeitintervall, in dem die bestrahlte Fläche des Werkstücks bestrahlt wird, beispielsweise bemessen in J/(mm² x sec), im Weiteren als "Leistungsdichte" bezeichnet. Wenn es in wesentlicher Weise auf die vom Werkstück absorbierte Leistungsdichte ankommt, kann unter der Leistungsdichte auch die vom Werkstück absorbierte Leistungsdichte verstanden werden.

Bei der mindestens einen Trennprozedur wird der Schneidkopf über dem Werkstück verfahren, wobei der Bearbeitungsstrahl, der hier ein Schneidstrahl ist, entlang einer Schnittlinie von einer ersten Schneidposition zu einer zweiten Schneidposition geführt wird. Die Schnittlinie ist eine vorgegebene bzw. vorgebbare (gedachte) Bahn, entlang welcher der Bearbeitungsstrahl geführt wird. Bei der trennenden Bearbeitung des Werkstücks hat der Bearbeitungsstrahl eine erste Leistungsdichte, die so bemessen ist, dass das Werkstück (vollständig) durchtrennt wird. Der Bearbeitungsstrahl wirkt mit einem auf die Schnittfuge gerichteten Arbeitsgasstrahl zusammen. Hierbei wird ein von der ersten Schneidposition zur zweiten Schneidposition sich erstreckender (konturbildender) Schnittspalt im Werkstück erzeugt, welcher das Werkstück durchbricht. Der erfindungsgemäße Prozess kann ein oder mehrere Trennprozeduren zur Erzeugung eines Schnittspalts für ein selbes Werkstückteil umfassen. Wie bereits erwähnt, wird ein nicht-konturbildender Schnittspalt erfindungsgemäß nicht betrachtet.

Falls der erfindungsgemäße Prozess nur eine einzige Trennprozedur zur Erzeugung eines Schnittspalts für ein selbes Werkstückteil aufweist, sind die erste Schneidposition und die zweite Schneidposition so gewählt, dass sich die (gedachte) Schnittlinie und der Schnittspalt entlang der kompletten Kontur des Werkstückteils erstreckt, so dass das Werkstückteil vollständig ausgeschnitten wird und unmittelbar nach Freischneiden durch den Bearbeitungsstrahl vom Restgitter entfernt werden kann.

Falls der erfindungsgemäße Prozess eine Mehrzahl von Trennprozeduren zur Erzeugung eines Schnittspalts für ein selbes Werkstückteil aufweist, wird bei jeder Trennprozedur ein Teil des Schnittspalts entlang der Schnittlinie erzeugt, wobei sich die jeweils erzeugten Teile des Schnittspalts zum Schnittspalt ergänzen. Typischer Weise wird der Schnittspalt durch eine nachfolgende Trennprozedur entlang der Schnittlinie kontinuierlich fortgesetzt. Die Verfahrbewegung des Strahlkopfs ist somit nicht kontinuierlich, sondern wird mindestens einmal unterbrochen. Um den Schnittspalt entlang der Schnittlinie kontinuierlich fortzusetzen, entspricht die erste Schneidposition einer Trennprozedur typischer Weise der zweiten Schneidposition einer unmittelbar vorhergehenden Trennprozedur. Bei jeder Trennprozedur wird ein Teil des Schnittspalts erzeugt, der sich von der ersten Schneidposition bis zur zweiten Schneidposition dieser Trennprozedur erstreckt.

Die mindestens eine Nachbearbeitungsprozedur dient zum Nachbearbeiten des Werkstücks entlang mindestens eines Teils des Schnittspalts, wobei der Begriff "Teil" hier bezogen ist auf die Erstreckung des Schnittspalts entlang der Schnittlinie. Das Werkstück kann durch die Nachbearbeitungsprozedur entlang des kompletten Schnittspalts nachbearbeitet werden. Alternativ kann das Werkstück durch die Nachbearbeitungsprozedur entlang nur eines Teils (Abschnitts) des Schnittspalts (bezogen auf die Erstreckung des Schnittspalts entlang der Schnittlinie) nachbearbeitet werden. Das einer Nachbearbeitung unterzogene Werkstück weist mindestens ein Werkstückteil auf, das vom Werkstück vollständig ausgeschnitten und entfernt wurde, so dass das Werkstück ein Restgitter mit verbliebenen restgitterseitigen Schnittkanten ist. Das Restgitter wird nur im Bereich einer restgitterseitigen Schnittkante eines Schnittspalts bearbeitet. Wie bereits erwähnt, werden vollständig ausgeschnittene und vom Restgitter entfernte Werkstückteile in dem erfindungsgemäßen Prozess nicht nachbearbeitet.

Die mindestens eine Nachbearbeitungsprozedur umfasst ein Verfahren des Strahlkopfs über dem Werkstück, wobei der Bearbeitungsstrahl, welcher hier kein Schneidstrahl, sondern aufgrund seiner Leistungsdichte ein Nachbearbeitungsstrahl ist, entlang einer Nachbearbeitungslinie von einer ersten Nachbearbeitungsposition zu einer zweiten Nachbearbeitungsposition geführt wird. Bei der Nachbearbeitung hat der Bearbeitungsstrahl eine von der ersten Leistungsdichte verschiedene zweite Leistungsdichte, die so bemessen ist, dass das Werkstück nicht durchtrennt wird, also kein Schnittspalt im Werkstück erzeugt wird. Vielmehr ist die zweite Leistungsdichte so bemessen, dass das Werkstück nicht-trennend und nicht-fügend bearbeitet wird.

Die Nachbearbeitungslinie ist eine vorgegebene bzw. vorgebbare (gedachte) Bahn, entlang welcher der Bearbeitungsstrahl zur Erzeugung eines nachbearbeiteten Bereichs (Nachbearbeitungszone) des Werkstücks entlang des Schnittspalts geführt werden soll. Die Nachbearbeitungslinie ist stets dem Schnittspalt zugeordnet, wobei sich die Nachbearbeitungslinie ausschließlich entlang des Schnittspalts erstreckt. Beispielsweise sind die Nachbearbeitungslinie und die Schnittlinie identisch. Alternativ sind die Nachbearbeitungslinie und die Schnittlinie nicht identisch. Beispielsweise ist die Nachbearbeitungslinie zur Schnittlinie seitlich versetzt, wobei die Nachbearbeitungslinie vorzugsweise einen gleichbleibenden senkrechten (kürzesten) Abstand zur Schnittlinie hat, d.h. die Nachbearbeitungslinie und die Schnittlinie sind äquidistante Linien). Die Nachbearbeitungszone wird stets entlang der kompletten Nachbearbeitungslinie erzeugt. Die Nachbearbeitungslinie bzw. Nachbearbeitungszone kann sich auch nur über einen Teil des Schnittspalts erstrecken, wobei sich der Begriff "Teil" hier auf die Erstreckung des Schnittspalts entlang der Schnittlinie bezieht.

Der erfindungsgemäße Prozess umfasst mindestens eine Nachbearbeitungsprozedur, in der die Nachbearbeitungslinie einen solchen Verlauf hat, dass das Werkstück in einem eine restgitterseitige Schnittkante des Schnittspalts enthaltenden Bereich durch den Bearbeitungsstrahl bestrahlt wird. Im Sinne vorliegender Erfindung bezeichnet der Ausdruck "Schnittkante" die beiden einander gegenüberliegenden Flächen von Restgitter und Werkstückteil, die gemeinsam den Schnittspalt bilden. Typischer Weise sind die Schnittkanten senkrecht zur Ebene eines plattenförmigen (ebenen) Werkstücks bzw. senkrecht zu einer Tangentialebene im Bereich des Schnittspalts eines rohrförmigen Werkstücks.

Eine Nachbearbeitung des Werkstücks (Restgitter) erfolgt entlang mindestens eines Teils des Schnittspalts, bezogen auf die Erstreckung des Schnittspalts entlang der Schnittlinie. Der Ausdruck "Bereich" bezieht sich hier auf einen Abschnitt des Werkstücks, der sich wenigstens entlang eines Teils des Schnittspalts erstreckt und zumindest eine Schnittkante des Schnittspalts enthält. Neben der Schnittkante kann der Bereich somit auch einen sich quer zur Schnittkante erstreckenden Abschnitt des Werkstücks (d.h. Restgitter) aufweisen. Möglich ist auch, dass ausschließlich die restgitterseitige Schnittkante des Schnittspalts nachbearbeitet wird, ohne weitere Abschnitte des Restgitters, die nicht Teil einer Schnittkante sind und sich quer zur Schnittkante erstrecken. Der Begriff "Nachbearbeitungszone" umfasst einen die restgitterseitige Schnittkante des Schnittspalts enthaltenden Bereich, wobei der jeweilige Bereich auch nur aus der zugehörigen Schnittkante bestehen kann.

Gemäß einer Ausgestaltung des erfindungsgemäßen Prozesses werden entlang des kompletten Schnittspalts ein oder mehrere Nachbearbeitungsprozeduren durchgeführt. Gemäß einer weiteren Ausgestaltung des erfindungsgemäßen Prozesses werden entlang eines oder mehrerer Teile des Schnittspalts ein oder mehrere Nachbearbeitungsprozeduren durchgeführt. Falls aus dem Werkstück bereits mindestens ein Werkstückteil vollständig ausgeschnitten und vom Restgitter entfernt wurde, erfolgt eine Nachbearbeitung des Werkstücks nur in einem eine restgitterseitige Schnittkante des Schnittspalts enthaltenden Bereich des Werkstücks.

Der erfindungsgemäße Prozess ermöglicht in vorteilhafter Weise das Erzeugen eines Schnittspalts und die Nachbearbeitung des Werkstücks () entlang mindestens eines Teils des Schnittspalts mittels des Bearbeitungsstrahls. Auf eine zeitaufwändige und kostenintensive Nachbearbeitung des vom Restgitter entfernten Werkstückteils kann verzichtet werden, so dass Zeit und Kosten bei der Fertigung von Werkstückteilen eingespart werden können. Dies ist ein großer Vorteil des erfindungsgemäßen Prozesses, zumal auch bestehende Strahlbearbeitungsvorrichtungen, insbesondere Laserschneidvorrichtungen, in einfacher Weise zur Durchführung des erfindungsgemäßen Prozesses nachgerüstet werden können.

Gemäß einer Ausgestaltung des erfindungsgemäßen Prozesses umfasst es nur eine einzige Trennprozedur und mindestens eine Nachbearbeitungsprozedur zur vollständigen Strahlbearbeitung eines selben Werkstücks. Der bei der Trennprozedur erzeugte Schnittspalt erstreckt sich vollständig entlang der Kontur des Werkstückteils. Es können auch mehrere Nachbearbeitungsprozeduren durchgeführt werden.

Gemäß einer weiteren Ausgestaltung des erfindungsgemäßen Prozesses umfasst es eine Mehrzahl Trennprozeduren und mindestens eine Nachbearbeitungsprozedur zur vollständigen Strahlbearbeitung eines selben Werkstückteils. Der durch die mehreren Trennprozeduren erzeugte Schnittspalt erstreckt sich vollständig entlang der Kontur des Werkstückteils. Es können auch eine Mehrzahl von Nachbearbeitungsprozeduren für einen selben oder verschiedene Teile des Schnittspalts durchgeführt werden.

Gemäß einer Ausgestaltung der Erfindung wird entlang mindestens eines selben Teils des Schnittspalts, insbesondere entlang des kompletten Schnittspalts, eine Mehrzahl von Nachbearbeitungsprozeduren durchgeführt. Hierbei können verschiedene Nachbearbeitungsprozeduren für denselben Teil des Schnittspalts gleiche Nachbearbeitungslinien und/oder gleiche Leistungsdichten oder aber verschiedene Nachbearbeitungslinien und/oder verschiedene Leistungsdichten des Bearbeitungsstrahls aufweisen. Bei einer bevorzugten Ausgestaltung des erfindungsgemäßen Verfahrens weisen zumindest zwei Nachbearbeitungsprozeduren, die für einen selben Teil eines Schnittspalts durchgeführt werden, verschiedene Nachbearbeitungslinien und/oder verschiedene Leistungsdichten des Bearbeitungsstrahls auf.

Bei einer Ausgestaltung des erfindungsgemäßen Prozesses zur Strahlbearbeitung eines platten- oder rohrförmigen Werkstücks, bei welchem mindestens zwei Nachbearbeitungsprozeduren zum Nachbearbeiten des Werkstücks entlang mindestens eines selben Teils des Schnittspalts durchgeführt werden, wird bei mindestens einer ersten Nachbearbeitungsprozedur das Werkstück in einem eine restgitterseitige Schnittkante des Schnittspalts enthaltenden Bereich vom Bearbeitungsstrahl bestrahlt. Zudem wird bei mindestens einer zweiten Nachbearbeitungsprozedur das Werkstück in einem die restgitterseitige Schnittkante des Schnittspalts nicht enthaltenden Bereich vom Bearbeitungsstrahl bestrahlt. Hierbei kann die mindestens eine erste Nachbearbeitungsprozedur zeitlich vor der mindestens einen zweiten Nachbearbeitungsprozedur durchgeführt werden, was bevorzugt sein kann, oder die mindestens eine zweite Nachbearbeitungsprozedur wird zeitlich vor der mindestens einen ersten Nachbearbeitungsprozedur durchgeführt. Diese Ausgestaltung der Erfindung ist insbesondere bei der Erzeugung einer Fase am Schnittspalt vorteilhaft. Insbesondere kann die Fase ausgehend von der bearbeitenden Schnittkante erzeugt werden. Bei der mindestens einen zweiten Nachbearbeitungsprozedur muss die Schnittkante nicht mehr mitbestrahlt werden, sondern der Bearbeitungsstrahl kann in Richtung weg von der Schnittkante weiter in das Restgitter hinein versetzt werden.

Wird der Schnittspalt in mehreren Stufen erzeugt, wird gemäß einer Ausgestaltung der Erfindung durch eine Nachbearbeitungsprozedur das Werkstück nur entlang jenes Teil des Schnittspalts nachbearbeitet, der durch die unmittelbar vorangegangene Trennprozedur erzeugt wurde. Dies kann der komplette Teil des Schnittspalts sein, der bei der unmittelbar vorangegangenen Trennprozedur erzeugt wurde, oder nur ein Abschnitt hiervon, wobei sich der Begriff "Abschnitt" hier auf die Erstreckung des Schnittspalts entlang der Schnittlinie bezieht. Denkbar ist jedoch auch, dass durch eine Nachbearbeitungsprozedur das Werkstück nur entlang jenes Teils des Schnittspalts nachbearbeitet wird, der durch eine nicht unmittelbar vorangegangene Trennprozedur erzeugt wurde. Dies kann der komplette Teil des Schnittspalts sein, der bei der nicht unmittelbar vorangegangenen Trennprozedur erzeugt wurde, oder nur ein Abschnitt hiervon, wobei sich der Begriff "Abschnitt" hier auf die Erstreckung des Schnittspalts bezieht. Möglich ist auch, dass durch eine Nachbearbeitungsprozedur das Werkstück entlang mehrerer Teile des Schnittspalts nachbearbeitet wird, die durch mehrere vorangegangene Trennprozeduren erzeugt wurden. Die können jeweils die kompletten Teile des Schnittspalts sein, die bei den vorangegangenen Trennprozeduren erzeugt wurden, oder jeweils nur ein Abschnitt hiervon, wobei sich der Begriff "Abschnitt" hier auf die Erstreckung des Schnittspalts bezieht.

Bei einer Ausgestaltung des erfindungsgemäßen Prozesses, bei welcher eine Mehrzahl Trennprozeduren zur Erzeugung des Schnittspalts für ein selbes Werkstückteil vorgesehen sind, wird bei jeder Trennprozedur ein Teil des Schnittspalts erzeugt. Bevorzugt wird bei der letzten Trennprozedur ein Teil des Schnittspalts erzeugt, der entlang der Schnittlinie eine Abmessung (Länge) aufweist, die kleiner ist als jede einzelne der entlang der Schnittlinie sich bemessende Abmessungen (Längen) der bei einer oder mehreren vorhergehenden Trennprozeduren erzeugten Teile des Schnittspalts. Beispielsweise nehmen die Längen der bei aufeinanderfolgenden Trennprozeduren erzeugten Teile des Schnittspalts, von einem Freischneidpunkt des Werkstückteils aus betrachtet, entgegen der Erzeugungsrichtung des Schnittspalts nicht ab, beispielsweise kontinuierlich.

Bei einer Ausgestaltung des erfindungsgemäßen Prozesses wird nach einer Trennprozedur der Strahlkopf von der zweiten Schneidposition der Trennprozedur weg verfahren, wobei der Bearbeitungsstrahl für diese Verfahrbewegung auch ausgeschaltet werden kann. Der Strahlkopf kann hierbei auch über das Werkstück, insbesondere innerhalb der Kontur des auszuschneidenden Werkstückteils, verfahren werden. Der Strahlkopf wird hierdurch in eine Position bewegt, bei der der Bearbeitungsstrahl auf die erste Nachbearbeitungsposition der Nachbearbeitungslinie trifft. Die erste Nachbearbeitungsposition ist demnach verschieden von der zweiten Schneidposition der vorangegangenen Trennprozedur. Beispielsweise ist die erste Nachbearbeitungsposition der Nachbearbeitungslinie identisch zur ersten Schneidposition der vorangegangenen Trennprozedur, wobei es gleichermaßen möglich ist, dass die erste Nachbearbeitungsposition von der ersten Schneidposition verschieden ist. Möglich ist auch, dass die erste Nachbearbeitungsposition der Nachbearbeitungslinie zwischen der ersten Schneidposition und der zweiten Schneidposition der vorangegangenen Trennprozedur liegt, zumindest in senkrechter Sicht auf die Schnittlinie bzw. den Schnittspalt. Beispielsweise ist die zweite Nachbearbeitungsposition identisch zur zweiten Schneidposition der vorangegangenen Trennprozedur, wobei es gleichermaßen möglich ist, dass die zweite Nachbearbeitungsposition von der zweiten Schneidposition verschieden ist. Möglich ist auch, dass die zweite Nachbearbeitungsposition zwischen der ersten Schneidposition und der zweiten Schneidposition der vorangegangenen Trennprozedur liegt, zumindest in senkrechter Sicht auf die Schnittlinie bzw. den Schnittspalt.

Bei einer weiteren Ausgestaltung des erfindungsgemäßen Verfahrens wird für die Durchführung der mindestens einen Nachbearbeitungsprozedur der Strahlkopf von der zweiten Schneidposition der vorangegangenen Trennprozedur nicht weg verfahren, so dass die erste Nachbearbeitungsposition der Nachbearbeitungslinie identisch zur zweiten Schneidposition der Schnittlinie der vorangegangenen Trennprozedur ist.

Die Richtung zur Nachbearbeitung des Werkstücks entlang des Schnittspalts kann der Richtung der Erzeugung des Schnittspalts entsprechen oder auch hierzu entgegengesetzt sein.

Die Strahlachse des Bearbeitungsstrahls ist bei der mindestens einen Trennprozedur vorzugsweise stets senkrecht zum platten- oder rohrförmigen Werkstück bzw. senkrecht zur Werkstückoberfläche gerichtet, wobei es aber auch denkbar ist, dass die Strahlachse von der Senkrechten abweicht. Die Strahlachse des Bearbeitungsstrahls ist bei der mindestens einen Nachbearbeitungsprozedur vorzugsweise stets senkrecht zum platten- oder rohrförmigen Werkstück bzw. senkrecht zur Werkstückoberfläche gerichtet, wobei es aber auch denkbar ist, dass die Strahlachse von der Senkrechten abweicht.

Unter "Ausrichtung" des Bearbeitungsstrahls ist der Winkel zwischen dem Mittenstrahl des auf das Werkstück treffenden Strahlkegels (d.h. Strahlachse) des Bearbeitungsstrahls und der ebenen Werkstückoberfläche des Werkstücks zu verstehen. Bei einem rohrförmigen Werkstück wird eine tangentiale Ebene zur Werkstückoberfläche im Auftreffpunkt der Strahlachse betrachtet. Bei einer senkrechten Ausrichtung des Bearbeitungsstrahls beträgt der Winkel zwischen der Strahlachse und der Werkstückoberfläche 90°.

Gemäß einer bevorzugten Ausgestaltung des erfindungsgemäßen Verfahrens ist die Ausrichtung des Bearbeitungsstrahls beim Bestrahlen des Werkstücks zum Nachbehandeln während der mindestens einen Nachbehandlungsprozedur stets unverändert und gleich zu einer stets unveränderten Ausrichtung des Bearbeitungsstrahls beim Bestrahlen des Werkstücks zum Erzeugen des Schnittspalts bei der mindestens einen Trennprozedur. Vorzugsweise ist der Bearbeitungsstrahl bei der mindestens einen Trennprozedur und der mindestens einen Nachbearbeitungsprozedur stets senkrecht zur Werkstückoberfläche gerichtet. Die Strahlachse des Bearbeitungsstrahls bleibt somit bei der Erzeugung des Schnittspalts und der Nachbehandlung unverändert. Durch diese Maßnahme kann die Nachbehandlung des Werkstücks in steuerungstechnischer Hinsicht erheblich vereinfacht werden. Zudem können Kosten für die technische Umsetzung einer entsprechenden Verschwenkbarkeit des Strahlkopfs und/oder Bearbeitungsstrahls relativ zum Werkstück eingespart werden.

Gemäß einer alternativen Ausgestaltung des erfindungsgemäßen Verfahrens ist die Ausrichtung des Bearbeitungsstrahls beim Bestrahlen des Werkstücks zum Nachbehandeln während der mindestens einen Nachbehandlungsprozedur zumindest zeitweilig verschieden von der Ausrichtung des Bearbeitungsstrahls bei der mindestens einen Trennprozedur. Insbesondere kann die Strahlachse bei der Nachbehandlung zumindest zeitweilig einen von 90° verschiedenen Winkel zur Werkstückoberfläche einnehmen. Die Ausrichtung des Bearbeitungsstrahls kann durch eine Verschwenkbarkeit des Strahlkopfs (mechanisch) und/oder eine Veschwenkbarkeit des Bearbeitungsstrahls (optisch) erreicht werden.

Bei der mindestens einen Trennprozedur wird der Bearbeitungsstrahl bzw. dessen Strahlachse entlang der Schnittlinie geführt. Die Schnittlinie gibt somit den Weg des Bearbeitungsstrahls auf der Werkstückoberfläche beim Erzeugen des Schnittspalts für ein auszuschneidendes Werkstückteil an. Bei der mindestens einen Nachbearbeitungsprozedur wird der Bearbeitungsstrahls bzw. dessen Strahlachse entlang der Nachbearbeitungslinie geführt. Die Nachbearbeitungslinie gibt somit den Weg des Bearbeitungsstrahls auf der Werkstückoberfläche beim Nachbearbeiten des Werkstücks entlang des Schnittspalts an. Bei einem senkrechten Auftreffen des Bearbeitungsstrahls auf die Werkstückoberfläche wird der Strahlkopf bei der Trennprozedur entlang einer Verfahrkurve bewegt, die einer Projektion der Schnittlinie in senkrechter Sicht durch das platten- oder rohrförmige (ebene) Werkstück entspricht. Möglich ist auch, dass der Strahlkopf entlang einer zu diesen Verfahrkurve parallelen Verfahrkurve bewegt wird. In entsprechender Weise wird der Strahlkopf bei der Nachbearbeitungsprozedur entlang einer Verfahrkurve bewegt, die einer Projektion der Nachbearbeitungslinie in senkrechter Sicht durch das platten- oder rohrförmige (ebene) Werkstück entspricht. Möglich ist auch, dass der Strahlkopf entlang einer zu diesen Verfahrkurve parallelen Verfahrkurve bewegt wird.

Die Nachbearbeitungslinie der mindestens einen Nachbearbeitungsprozedur ist der Schnittlinie bzw. dem Schnittspalt zugeordnet und kann grundsätzlich beliebig ausgebildet sein, solange gewährleistet ist, dass das Werkstück durch Bestrahlen mit dem Bearbeitungsstrahl in einem eine restgitterseitige Schnittkante des Schnittspalts enthaltenden Bereich des Restgitters nachbearbeitet werden kann. Gemäß einer Ausgestaltung der mindestens einen Nachbearbeitungsprozedur ist die Nachbearbeitungslinie identisch zur Schnittlinie bzw. Schnittspalt. In diesem Fall hat die Nachbearbeitungslinie einen gleichen Verlauf wie die Schnittlinie. Gemäß einer weiteren Ausgestaltung der mindestens einen Nachbearbeitungsprozedur ist die Nachbearbeitungslinie nicht identisch zur Schnittlinie bzw. Schnittspalt. Beispielswiese ist die Nachbearbeitungslinie relativ zur Schnittlinie seitlich versetzt, wobei die Nachbearbeitungslinie insbesondere äquidistant zur Schnittlinie verlaufen kann. Gemäß einer Ausgestaltung haben die Nachbearbeitungslinie und die Schnittlinie eine selbe Form und einen parallelen Verlauf.

Bei einer Ausgestaltung der Erfindung werden mehrere Nachbearbeitungsprozeduren entlang eines selben Teil des Schnittspalts, insbesondere entlang des kompletten Schnittspalts, durchgeführt, wobei die Nachbearbeitungslinie bei einer nachfolgenden Nachbearbeitungsprozedur weiter weg von der Schnittlinie versetzt ist als bei einer vorhergehenden Nachbearbeitungsprozedur. Insbesondere können die Nachbearbeitungslinien einen gleichen Verlauf wie die Schnittlinie haben. Beispielsweise können die Nachbearbeitungslinien jeweils äquidistant zur Schnittlinie sein. Diese Ausgestaltung der Erfindung kann bei der mehrstufigen Erzeugung einer Fase bevorzugt sein.

Eine Steuerung des Bearbeitungsstrahls kann durch Verfahren des Strahlkopfes und/oder durch Verändern der Ausrichtung des Strahlkopfes relativ zur Werkstückoberfläche (Verschwenken des Strahlkopfes) und/oder durch Verändern der Strahlrichtung relativ zum Strahlkopf (optisches Verschwenken des Bearbeitungsstrahls relativ zu dem in seiner Ausrichtung unveränderten Strahlkopf) erfolgen. Vorzugsweise erfolgt eine Steuerung des Bearbeitungsstrahls nur durch entsprechendes Verfahren des Strahlkopfes, wobei die Ausrichtung des Strahlkopfes zur Werkstückoberfläche und die Ausrichtung des Bearbeitungsstrahls relativ zum Strahlkopf bei der Strahlbearbeitung des Werkstücks (trennende Bearbeitung und Nachbearbeitung) entsprechend dem erfindungsgemäßen Prozess unverändert bleibt, was eine aufwändige und kostenintensive technische Ausstattung einer Bearbeitungsvorrichtung vermeidet.

Gemäß einer Ausgestaltung des erfindungsgemäßen Prozesses beträgt der Abstand der Nachbearbeitungslinie von der Schnittlinie (Nachbearbeitungslinie ist vorzugsweise äquidistant zur Schnittlinie versetzt) maximal die halbe Spaltbreite des Schnittspalts zuzüglich eines Radius eines Strahlkegels des Bearbeitungsstrahls an der Werkstückoberfläche. Möglich ist jedoch auch, dass der Abstand der Nachbearbeitungslinie von der Schnittlinie größer ist, beispielsweise bei der mehrstufigen Herstellung einer Fase, bei der die Nachbearbeitungslinie bei einer nachfolgenden Nachbearbeitungsprozedur weg vom Schnittspalt angeordnet ist als die Nachbearbeitungslinie einer vorhergehenden Nachbearbeitungsprozedur.

Beispielsweise ist die Verfahrkurve des Strahlkopfes während der mindestens einen Nachbehandlungsprozedur seitlich versetzt (insbesondere äquidistant) zur Verfahrkurve des Strahlkopfes während der mindestens einen Trennprozedur. Die Verfahrkurve des Strahlkopfes während der mindestens einen Nachbehandlungsprozedur und die Verfahrkurve des Strahlkopfes während der mindestens einen Trennprozedur können einen parallelen Verlauf haben.

Bei der mindestens einen Nachbehandlungsprozedur hat der Bearbeitungsstrahl eine von der ersten Leistungsdichte verschiedene zweite Leistungsdichte, welche so bemessen ist, dass eine nicht-fügende und nicht-trennende (jedoch gegebenenfalls umschmelzende) Nachbehandlung des Werkstücks bewirkt wird. Es wird bei der Nachbehandlung also weder eine Verbindung zwischen dem teilweise ausgeschnittenen Werkstückteil und dem Restgitter über den Schnittspalt hinweg erzeugt, noch wird das Werkstück durchtrennt. Hierbei wird der Einfluss des Arbeitsgases berücksichtigt, wobei erfindungsgemäß unter Leistungsdichte des Bearbeitungsstrahls auch die vom Werkstück absorbierte Leistungsdichte verstanden werden kann. Eine Änderung der Leistungsdichte bzw. absorbierten Leistungsdichte kann durch verschiedene Maßnahmen erreicht werden, insbesondere durch Ändern der Energie des Bearbeitungsstrahls, Ändern des Strahlfokus, Ändern des Abstands des Strahlkopfes von der Werkstückoberfläche, Ändern der Art und/oder von Parametern des Arbeitsgases und dergleichen. Dem Fachmann sind Maßnahmen zum Ändern der Leistungsdichte wohlbekannt, so dass hier nicht näher darauf eingegangen werden muss.

Beispielsweise beträgt die zweite Leistungsdichte weniger als 50%, weniger als 40%, weniger als 30%, weniger als 20%, weniger als 10% oder weniger als 1% der ersten Leistungsdichte.

In dem erfindungsgemäßen Prozess zur Strahlbearbeitung eines platten- oder rohrförmigen Werkstücks können die Nachbearbeitungen des Werkstücks entlang des Schnittspalts in verschiedenster Weise erfolgen, wobei abhängig von der Art der Nachbearbeitung die Nachbearbeitungslinie und die zweite Leistungsdichte des Bearbeitungsstrahls in geeigneter Weise zu wählen sind. Verschiedene Nachbearbeitungen können auch in gleichen Bereichen des Werkstücks entlang des Schnittspalts bzw. entlang eines selben Teils des Schnittspalts oder entlang des kompletten Schnittspalts vorgenommen werden. Der erfindungsgemäße Prozess wird für die nachfolgend angegebenen sechs Anwendungsfälle vorteilhaft eingesetzt.

Bei einem ersten Anwendungsfall wird eine Oxidschicht von der restgitterseitigen Schnittkante des Schnittspalts entfernt. Der bestrahlte Bereich kann sich gegebenenfalls auf die Schnittkante(n) beschränken.

Bei einem zweiten Anwendungsfall wird Grat (z.B. Mikrograt) von der restgitterseitigen Schnittkante des Schnittspalts entfernt. Der Grat befindet sich häufig angrenzend an die Werkstückoberfläche (dem Bearbeitungsstrahl zugewandt) und/oder angrenzend an die Werkstückunterseite (vom Bearbeitungsstrahl abgewandt). Der bestrahlte Bereich kann sich gegebenenfalls auf die Schnittkante(n) beschränken.

Bei einem dritten Anwendungsfall wird die restgitterseitige Schnittkante des Schnittspalts verrundet (durch Umschmelzen). Hierbei kann die Nachbearbeitungslinie relativ zur Schnittlinie in Richtung der zu bearbeitenden Schnittkante seitlich versetzt sein, vorzugsweise maximal um die halbe Schnittspaltbreite plus Radius des Strahlkegels des Bearbeitungsstrahls an der Werkstückoberfläche.

Bei einem vierten Anwendungsfall wird die restgitterseitige Schnittkante des Schnittspalts in ihrer Form verändert (durch Umschmelzen), beispielsweise geglättet oder aufgeraut, beispielsweise um einen Fügeprozess zu verbessern.

Bei einem fünften Anwendungsfall wird an der restgitterseitigen Schnittkante des Schnittspalts eine Fase erzeugt. Dies kann auch in mehreren Schritten erfolgen, wobei gemäß einer bevorzugten Ausgestaltung die Nachbearbeitungslinie bei jeder nachfolgenden Nachbearbeitung weiter weg von der zugehörigen Schnittkante angeordnet wird.

Bei einem sechsten Anwendungsfall werden die restgitterseitige Schnittkante des Schnittspalts und/oder ein Bereich des Restgitter, welcher die restgitterseitige Schnittkante enthält, bei der Nachbehandlung mit einer Beschichtung versehen (z.B. Zinkbeschichtung). Dies kann in einfacher Weise durch Zugabe einer die Beschichtung erzeugenden Substanz (z.B. Zink) zu einem zweiten Arbeitsgasstrahl erfolgen. Der zweite Arbeitsgasstrahl ist von dem koaxial zum Bearbeitungsstrahl geführten (ersten) Arbeitsgasstrahl verschieden. Der vom zweiten Arbeitsgasstrahl bestrahlte Bereich kann sich gegebenenfalls auf die Schnittkante(n) beschränken. Die Beschichtung kann auch in mehreren Schritten erfolgen, wobei gemäß einer bevorzugten Ausgestaltung die Nachbearbeitungslinie bei jeder nachfolgenden Nachbearbeitung weiter weg von der zugehörigen Schnittkante angeordnet wird. Durch diese Maßnahme können in besonders vorteilhafter Weise auch beschichtete Werkstücke durch einen Schneidstrahl thermisch trennend bearbeitet werden. Eine etwaige Nachbeschichtung des vollständig ausgeschnittenen Werkstückteils ist nicht erforderlich.

Bei der Nachbearbeitung des Werkstücks können die oben beschriebenen Anwendungsfälle einzeln oder in beliebigen Kombinationen entlang eines selben oder verschiedener Teile des Schnittspalts, insbesondere entlang des kompletten Schnittspalts, realisiert werden.

Gemäß vorliegender Erfindung wird die mindestens eine Nachbearbeitungsprozedur zum Nachbearbeiten des Werkstücks nicht zum Laserhärten, Laserglühen, insbesondere Laserweichglühen, eingesetzt.

In dem erfindungsgemäßen Prozess zur Strahlbearbeitung eines Werkstücks wird der Bearbeitungsstrahl vom Strahlkopf geführt und tritt an einer endständigen Strahldüse, die mit einer Strahldüsenöffnung versehen ist, aus. Typischer Weise, jedoch nicht zwingend, verjüngt sich die Strahldüse kegelförmig zum Werkstück bzw. zur Werkstückauflage hin. Die Strahldüsenöffnung ist typischer Weise, jedoch nicht zwingend, rund ausgebildet. Der Bearbeitungsstrahl ist typischer Weise, jedoch nicht zwingend, in Form eines auf das Werkstück treffenden Strahlkegels ausgebildet. Typischer Weise dient der Strahlkopf auch zum Führen eines (ersten) Arbeitsgasstrahls, der typischer Weise, jedoch nicht zwingend, aus derselben Strahldüse wie der Bearbeitungsstrahl abgegeben wird und vorzugsweise koaxial zum Bearbeitungsstrahl geführt ist. Der aus der Strahldüse des Strahlkopfs austretende (erste) Arbeitsgasstrahl ist typischer Weise, jedoch nicht zwingend, in Form eines auf das Werkstück treffenden Gaskegels ausgebildet. Wie oben erwähnt, kann der Strahlkopf auch zum Führen eines vom ersten Arbeitsgasstrahls verschiedenen zweiten Arbeitsgasstrahls dienen, der zum Transport von Beschichtungsmaterial dient und nicht aus dem gleichen Loch des Strahlkopfs wie der Bearbeitungsstrahl austritt.

Der Strahlkopf kann relativ zum Werkstück bewegt werden. Das typischer Weise einer ebenen Werkstückauflage aufliegende Werkstück weist eine dem Strahlkopf gegenüberliegende, beispielsweise ebene, Werkstückoberfläche auf, auf die der Bearbeitungs- und Arbeitsgasstrahl zur trennenden Bearbeitung sowie zur Nachbearbeitung des Werkstücks gerichtet werden können.

Die Erfindung erstreckt sich weiterhin auf eine Strahlbearbeitungsvorrichtung mit einem von einem Strahlkopf geführten Bearbeitungsstrahl zur Strahlbearbeitung eines platten- oder rohrförmigen Werkstücks, welche eine elektronische Steuereinrichtung zur Steuerung/Regelung der Strahlbearbeitung des Werkstücks aufweist, welche zur Durchführung des oben beschriebenen erfindungsgemäßen Prozesses (programmtechnisch) eingerichtet ist.

Ferner erstreckt sich die Erfindung auf einen Programmcode für eine zur Datenverarbeitung geeignete elektronische Steuereinrichtung für eine solche Strahlbearbeitungsvorrichtung, welcher Steuerbefehle enthält, die die Steuereinrichtung zur Durchführung des oben beschriebenen, erfindungsgemäßen Prozesses veranlassen.

Des Weiteren erstreckt sich die Erfindung auf ein Computerprogrammprodukt (Speichermedium) mit einem gespeicherten Programmcode für eine zur Datenverarbeitung geeignete elektronische Steuereinrichtung für eine solche Strahlbearbeitungsvorrichtung, welcher Steuerbefehle enthält, die die Steuereinrichtung zur Durchführung des oben beschriebenen, erfindungsgemäßen Prozesses veranlassen.

Es versteht sich, dass die vorstehend genannten Ausgestaltungen der Erfindung in Alleinstellung oder in beliebiger Kombination einsetzbar sind, ohne den Rahmen der vorliegenden Erfindung zu verlassen.

### Kurze Beschreibung der Zeichnungen

Die Erfindung wird näher erläutert, wobei Bezug auf die beigefügten Figuren genommen wird. Es zeigen:
- Fig. 1-15: einen beispielhaften Prozess zur Strahlbearbeitung eines Werkstücks;
- Fig. 16-21: verschiedene Anwendungsfälle zur Nachbearbeitung eines Werkstücks;
- Fig. 22: eine schematische Darstellung einer beispielhaften Strahlbearbeitungsvorrichtung zur Ausführung des erfindungsgemäßen Prozesses zur Strahlbearbeitung eines Werkstücks;
- Fig. 23: ein Flussdiagramm des erfindungsgemäßen Prozesses.

### Ausführliche Beschreibung der Zeichnungen

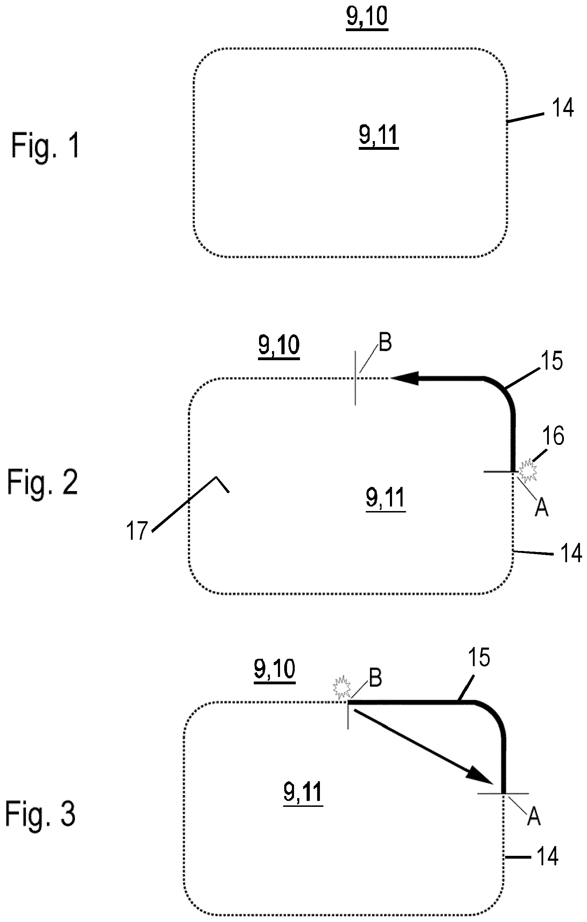

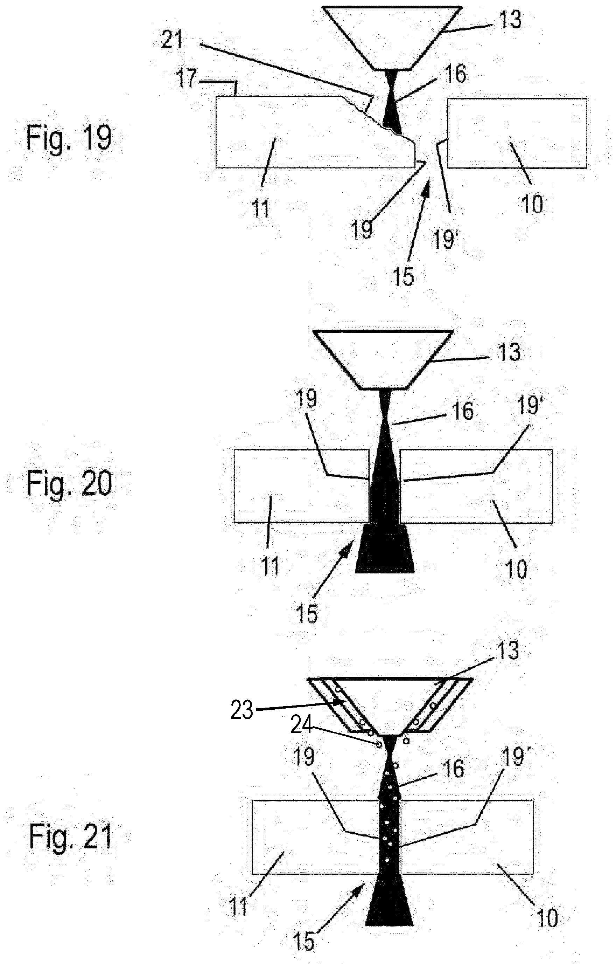

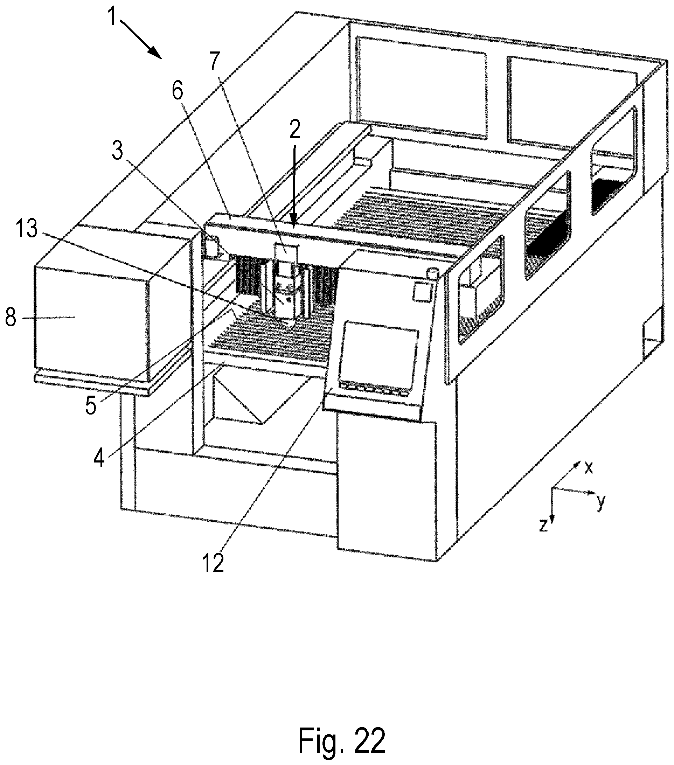

Sei zunächst Figur 22 betrachtet, worin eine an sich bekannte Strahlbearbeitungsvorrichtung zum Strahlschneiden von plattenartigen Werkstücken veranschaulicht ist. Die insgesamt mit der Bezugszahl 1 bezeichnete Strahlbearbeitungsvorrichtung umfasst eine Strahlschneideinrichtung 2 mit einem Strahlkopf 3, sowie einen Arbeitstisch 4 mit einer Werkstückauflage 5 für ein Werkstück 9 (nicht gezeigt in Figur 21, siehe Figuren 1 bis 15), beispielsweise eine ebene Blechtafel. Die Werkstückauflage 5 wird von einem Querträger 6 überspannt, der entlang einer ersten Achsrichtung (x-Richtung) verfahrbar geführt ist.

Am Querträger 6 ist ein Führungsschlitten 7 für den Strahlkopf 3 montiert, der am Querträger 6 entlang einer zur ersten Achsrichtung senkrechten zweiten Achsrichtung (y-Richtung) verfahrbar geführt ist. Der Strahlkopf 3 kann somit in einer durch die beiden Achsrichtungen (x-, y-Richtung) aufgespannten Ebene parallel und relativ zur beispielsweise horizontalen Werkstückauflage 5 verfahren werden. Der Strahlkopf 3 ist weiterhin in einer zur ersten und zweiten Achsrichtung senkrechten, dritten Achsrichtung (z-Richtung) höhenverfahrbar ausgebildet, wodurch der Abstand senkrecht zur Werkstückauflage 5 verändert werden kann. Bei einer horizontalen Werkstückauflage 5 entspricht die z-Richtung der Schwerkraftrichtung. Der Strahlkopf 3 weist auf seiner der Werkstückauflage 5 zugewandten Seite eine sich zur Werkstückauflage 5 hin kegelförmig verjüngende Strahldüse 13 auf. Der Strahlkopf 3 dient zum Führen eines Bearbeitungsstrahls, hier beispielsweise ein Laserstrahl, sowie eines Arbeitsgasstrahls. Der Bearbeitungsstrahl wird von einer Bearbeitungsstrahlquelle 8 erzeugt und beispielsweise durch ein Strahlführungsrohr und mehrere Umlenkspiegel oder ein Lichtleitkabel zum Strahlkopf 3 geführt. Über eine Fokussierlinse oder adaptive Optik kann der Bearbeitungsstrahl in gebündelter Form auf das Werkstück gerichtet werden. Aufgrund der Verfahrbarkeit des Strahlkopfs 3 entlang der ersten Achsrichtung (x-Richtung) und zweiten Achsrichtung (y-Richtung) kann mit dem Bearbeitungsstrahl jeder beliebige Punkt am Werkstück angefahren werden. Durch die Höhenverfahrbarkeit des Strahlkopfs 3 in z-Richtung kann über eine Änderung des Abstands zur Werkstückoberfläche der Arbeitsabstand der Strahldüse 13 zum Werkstück eingestellt werden. Der Abstand des Strahlkopfes 3 von der Werkstückoberfläche, insbesondere die Schneidhöhe, kann vor, während und nach dem Schneidprozess eingestellt werden. Eine trennende Bearbeitung des Werkstücks kann insbesondere mit einer variablen Schneidhöhe innerhalb eines Schneidhöhenbereichs durchgeführt werden. Die Fokuslage des Bearbeitungsstrahls kann über optische Elemente im Strahlkopf 3, beispielsweise eine adaptive Optik, eingestellt werden.

Ein erster Arbeitsgasstrahl (nicht näher dargestellt) dient dazu, die Schmelze aus der Schnittfuge zu treiben. Der Arbeitsgasstrahl wird von einer nicht näher dargestellten Gasstrahlerzeugungseinrichtung erzeugt. Als inertes Arbeitsgas wird beispielsweise Helium (He), Argon (Ar) oder Stickstoff (N2) eingesetzt. Als reaktives Arbeitsgas wird üblicherweise Sauerstoff (O2) verwendet. Bekannt ist auch die Verwendung von Gasgemischen. Der Arbeitsgasstrahl tritt aus derselben Strahldüse 13 aus wie der Bearbeitungsstrahl 16 und wird koaxial zum Bearbeitungsstrahl 16 an die Bearbeitungsstelle geführt und trifft dort mit einem von der Gasstrahlerzeugungseinrichtung vorgegebenen (initialen) Gasdruck auf der Werkstückoberfläche des Werkstücks auf.

Wie in Figur 22 gezeigt, besteht die Werkstückauflage 5 beispielsweise aus einer Vielzahl von Auflageelementen mit beispielsweise dreieckig ausgebildeten Tragpunktspitzen, welche gemeinsam eine Auflageebene für das zu bearbeitende Werkstück 9 definieren. Die Auflageelemente sind hier beispielsweise als längliche Auflagestege ausgeführt, die sich jeweils entlang der y-Richtung erstrecken und mit einem beispielsweise konstanten Zwischenabstand in paralleler Anordnung entlang der x-Richtung nebeneinander liegend angeordnet sind. Nicht näher dargestellt ist eine Absaugeinrichtung, durch welche während des Strahlschneidens entstehender Schneidrauch, Schlackepartikel und kleine Abfallteile abgesaugt werden können.

Eine programmgesteuerte Steuereinrichtung 12 dient zur Steuerung/Regelung des erfindungsgemäßen Prozesses zur Strahlbearbeitung des Werkstücks 9 in der Strahlbearbeitungsvorrichtung 1.

Es wird nun Bezug auf die Figuren 1 bis 15 genommen, worin ein beispielhafter Prozess zur Strahlbearbeitung eines Werkstücks durch die Strahlvorrichtung 1 von Figur 21 veranschaulicht ist.

Sei zunächst Figur 1 betrachtet, in der eine Schnittlinie 14 gezeigt ist (gestrichelte Linie), welche der kompletten Kontur eines Werkstückteils 11 entspricht. Die Kontur entspricht der äußeren Form bzw. Gestalt des auszuschneidenden Werkstückteils 11. Das Werkstückteil 11 soll aus dem nicht näher dargestellten platten- oder rohrförmigen Werkstück 9 vollständig ausgeschnitten werden, wobei das Restgitter 10 verbleibt. Das Werkstückteil 11 hat hier beispielsweise eine Rechteckform mit gerundeten Ecken, wobei es sich versteht, dass das Werkstückteil 11 jede beliebige Form haben kann.

In Figur 2 ist der aus dem Strahlkopf 3 austretende Bearbeitungsstrahl 16, beispielsweise Laserstrahl, schematisch veranschaulicht. Der Strahlkopf 3 ist in eine Position über der Schnittlinie 14 verfahren worden, in der der Bearbeitungsstrahl 16 mit seiner Strahlachse auf eine erste Schneidposition A der Schnittlinie 14 trifft. Wie in Figur 2 veranschaulicht, wird der Strahlkopf 3 entlang der Schnittlinie 14 verfahren, wobei der Bearbeitungsstrahl 16 von der ersten Schneidposition A zu einer zweiten Schneidposition B bewegt wird. Hierdurch wird ein das Werkstück 9 durchbrechender Schnittspalt 15 (durchgezogene Linie) zwischen der ersten Schneidposition A und der zweiten Schneidposition B erzeugt. Es versteht sich, dass der Bearbeitungsstrahl 16 auch entfernt von der Schnittlinie 14 in das Werkstück 9 einstechen kann, wobei erfindungsgemäß nur eine entlang der Kontur des Werkstückteils 11 verlaufende Schnittlinie 14 und dementsprechend ein die Kontur des Werkstückteils 11 bildender Schnittspalt 15 betrachtet wird.

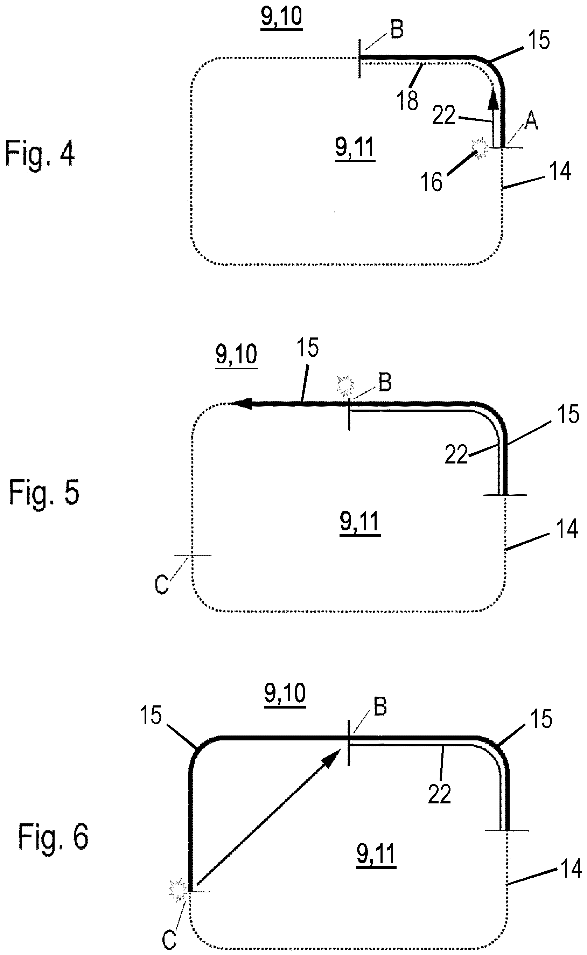

In Figur 3 ist eine Situation veranschaulicht, in der der Schnittspalt 15 zwischen der ersten Schneidposition A und der zweiten Schneidposition B erzeugt wurde. Die trennende Bearbeitung des Werkstücks 9 wird nun unterbrochen und die erste Trennprozedur ist beendet. Der Bearbeitungsstrahl 16 wird abgeschaltet und der Strahlkopf 3 wird in eine Position über der ersten Schneidposition A der Schnittlinie 14 verfahren. Wie in Figur 3 durch einen Pfeil veranschaulicht, kann die Verfahrbewegung des Strahlkopfes 3 innerhalb der Schnittlinie 14, d.h. über dem auszuschneidenden Werkstückteil 11, in direkter Linie zwischen der zweiten Schneidposition B und der ersten Schneidposition A der Schnittlinie 14 erfolgen. Die erste Schneidposition A entspricht der ersten Nachbearbeitungsposition einer Nachbearbeitungslinie 18 (siehe Figur 4).

Wie in Figur 4 veranschaulicht, wird der Bearbeitungsstrahl 16 nun wieder angeschaltet und der Strahlkopf 3 entlang der Nachbearbeitungslinie 18 (gestrichelte Linie) verfahren, wobei der Bearbeitungsstrahl 16 ausgehend von der der ersten Schneidposition A entsprechenden ersten Nachbearbeitungsposition zu einer der zweiten Schneidposition B entsprechenden zweiten Nachbearbeitungsposition verfahren wird. Hierbei wird eine Nachbearbeitungszone 22 erzeugt (schematisch veranschaulicht durch die durchgezogene Linie).

In Figur 5 ist eine Situation gezeigt, in der das Werkstück 9 entlang des kompletten Schnittspalts 15 der ersten Trennprozedur nachbearbeitet wurde. Der nachbearbeitete Bereich bzw. Nachbearbeitungszone 22 ist mit einer durchgezogenen Linie schematisch veranschaulicht.

In Figur 4 und den weiteren Figuren 5 bis 15 ist die Nachbearbeitungslinie 18 bzw. die Nachbearbeitungszone 22 aus Darstellungsgründen parallel versetzt und äquidistant zur Schnittlinie 14 gezeigt. Dies entspricht auch einer bevorzugten Positionierung der Nachbearbeitungslinie 18 für bestimmte Anwendungsfälle. Für die hier beispielhaft beschriebene Nachbearbeitung sollte die Nachbearbeitungslinie 18 identisch zur Schnittlinie 14 sein, was einer gleichermaßen bevorzugten Positionierung der Nachbearbeitungslinie 18 für bestimmte Anwendungsfälle entspricht, jedoch zeichnerisch nicht gut darstellbar ist. Wenn der Bearbeitungsstrahl 16 die der zweiten Schneidposition B entsprechende zweite Nachbearbeitungsposition erreicht hat, ist die erste Nachbearbeitungsprozedur beendet.

Wie weiterhin in Figur 5 veranschaulicht, wird nach Abschluss der ersten Nachbearbeitungsprozedur, ausgehend von der zweiten Schneidposition B, die für die nun folgende zweite Trennprozedur die erste Schneidposition darstellt, das Werkstück 9 weiter trennend bearbeitet, wobei der bereits erzeugte Teil des Schnittspalts 15 bis zur zweiten Schneidposition C der zweiten Trennprozedur verlängert wird.

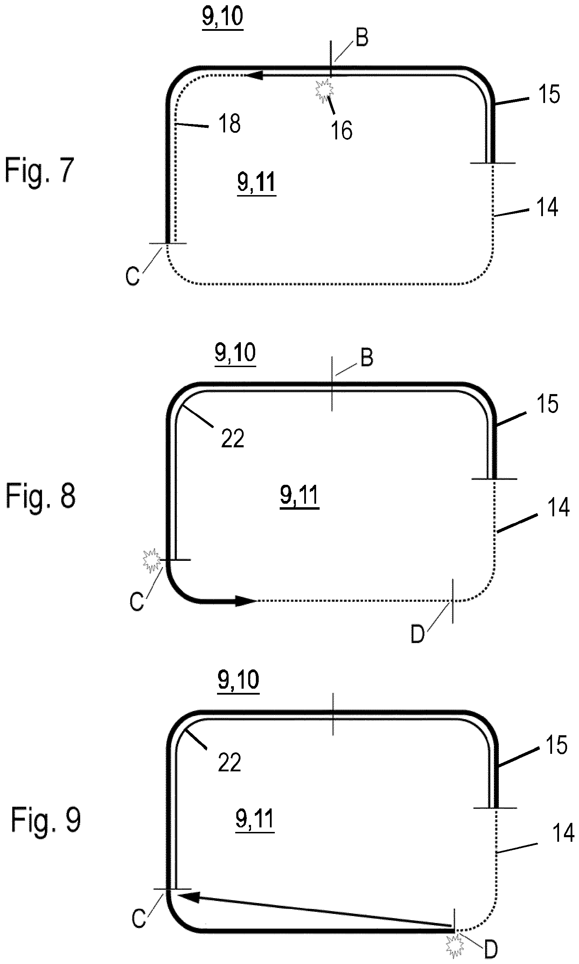

In Figur 6 ist eine Situation veranschaulicht, in der der Schnittspalt 15 zwischen der ersten Schneidposition B und der zweiten Schneidposition C der zweiten Trennprozedur erzeugt wurde. Die zweite Trennprozedur ist hier beendet und die trennende Bearbeitung des Werkstücks 9 wird unterbrochen. Der Bearbeitungsstrahl 16 wird abgeschaltet und der Strahlkopf 3 wird in eine Position über der ersten Schneidposition B der Schnittlinie 14 verfahren, wie durch einen Pfeil veranschaulicht ist. Die erste Schneidposition B der zweiten Trennprozedur entspricht der ersten Nachbearbeitungsposition der Nachbearbeitungslinie 18 für die zweite Nachbearbeitungsprozedur (siehe Figur 7).

Wie in Figur 7 veranschaulicht, wird der Bearbeitungsstrahl 16 wieder angeschaltet und der Strahlkopf 3 entlang der Nachbearbeitungslinie 18 verfahren, wobei der Bearbeitungsstrahl 16 von der der ersten Schneidposition B der zweiten Trennprozedur entsprechenden ersten Nachbearbeitungsposition zu einer der zweiten Schneidposition C entsprechenden zweiten Nachbearbeitungsposition verfahren wird.

In Figur 8 ist eine Situation gezeigt, in der das Werkstück 9 entlang des kompletten Schnittspalts 15 zwischen der der ersten Schneidposition B der zweiten Trennprozedur entsprechenden ersten Nachbearbeitungsposition und der der zweiten Schneidposition C der zweiten Trennprozedur entsprechenden zweiten Nachbearbeitungsposition nachbearbeitet wurde. Die zweite Nachbearbeitungsprozedur ist damit beendet.

Wie in Figur 8 veranschaulicht, wird nach Abschluss der zweiten Nachbearbeitungsprozedur, ausgehend von der zweiten Schneidposition C, die für die nun folgende dritte Trennprozedur die erste Schneidposition darstellt, das Werkstück 9 weiter trennend bearbeitet, wobei der bereits erzeugte Teil des Schnittspalts 15 bis zur zweiten Schneidposition D der dritten Trennprozedur verlängert wird.

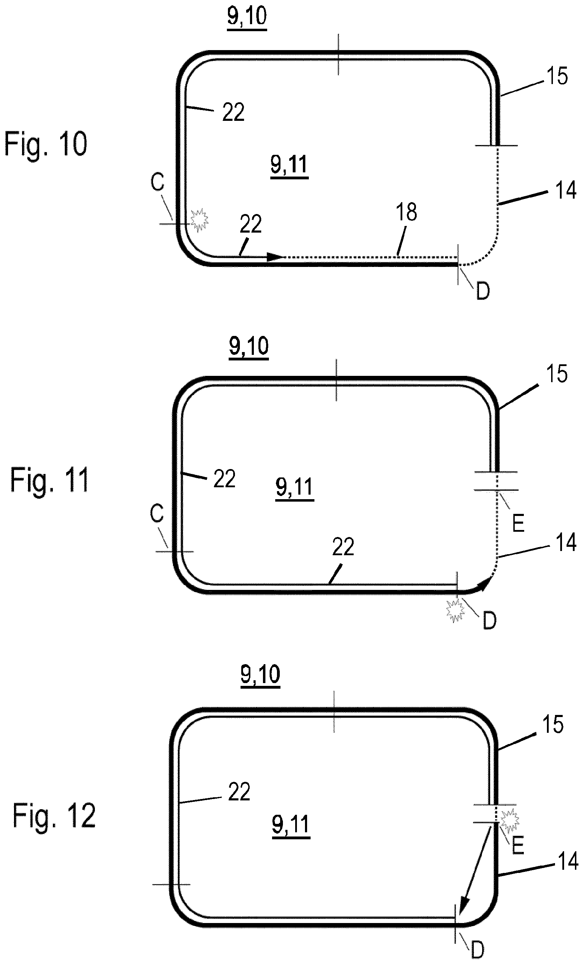

In Figur 9 ist eine Situation veranschaulicht, in der der Schnittspalt 15 zwischen der ersten Schneidposition C und der zweiten Schneidposition D der dritten Trennprozedur erzeugt wurde. Die dritte Trennprozedur ist hier beendet und die trennende Bearbeitung des Werkstücks 9 wird unterbrochen. Der Bearbeitungsstrahl 16 wird abgeschaltet und der Strahlkopf 3 wird in eine Position über der ersten Schneidposition C der dritten Trennprozedur der Schnittlinie 14 verfahren. Die erste Schneidposition C der dritten Trennprozedur entspricht der ersten Nachbearbeitungsposition der Nachbearbeitungslinie 18 für die dritte Nachbearbeitungsprozedur (siehe Figur 10).

Wie in Figur 10 veranschaulicht, wird der Bearbeitungsstrahl 16 wieder angeschaltet und der Strahlkopf 3 entlang der Nachbearbeitungslinie 18 verfahren, wobei der Bearbeitungsstrahl 16 von der der ersten Schneidposition C der dritten Trennprozedur entsprechenden ersten Nachbearbeitungsposition zu einer der zweiten Schneidposition D der dritten Trennprozedur entsprechenden zweiten Nachbearbeitungsposition verfahren wird.

In Figur 11 ist eine Situation gezeigt, in der das Werkstück 9 entlang des kompletten Schnittspalts 15 zwischen der der ersten Schneidposition C der dritten Trennprozedur entsprechenden ersten Nachbearbeitungsposition und der der zweiten Schneidposition D der dritten Trennprozedur entsprechenden zweiten Nachbearbeitungsposition nachbearbeitet wurde. Die dritte Nachbearbeitungsprozedur ist damit beendet.

Wie in Figur 11 veranschaulicht, wird nach Abschluss der dritten Nachbearbeitungsprozedur, ausgehend von der zweiten Schneidposition D der dritten Trennprozedur, die für die nun folgende vierte Trennprozedur die erste Schneidposition darstellt, das Werkstück 9 weiter trennend bearbeitet, wobei der bereits erzeugte Teil des Schnittspalts 15 bis zur zweiten Schneidposition E der vierten Trennprozedur verlängert wird.

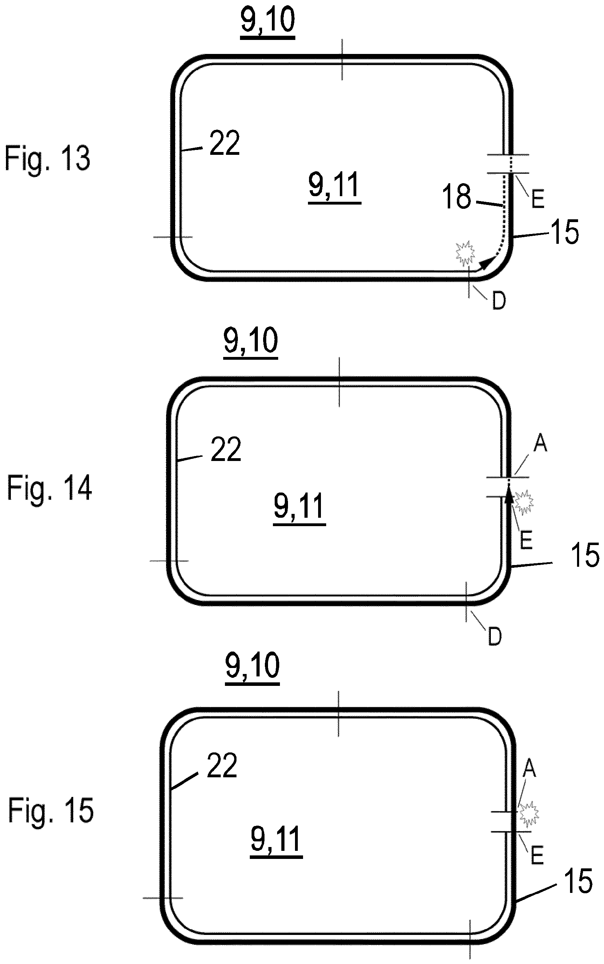

In Figur 12 ist eine Situation veranschaulicht, in der der Schnittspalt 15 zwischen der ersten Schneidposition D und der zweiten Schneidposition E der vierten Trennprozedur erzeugt wurde. Die vierte Trennprozedur ist hier beendet und die trennende Bearbeitung des Werkstücks 9 wird unterbrochen. Der Bearbeitungsstrahl 16 wird abgeschaltet und der Strahlkopf 3 wird in eine Position über der ersten Schneidposition D der vierten Trennprozedur der Schnittlinie 14 verfahren. Die erste Schneidposition D der vierten Trennprozedur entspricht der ersten Nachbearbeitungsposition der Nachbearbeitungslinie 18 für die vierte Nachbearbeitungsprozedur (siehe Figur 13).

Wie in Figur 13 veranschaulicht, wird der Bearbeitungsstrahl 16 wieder angeschaltet und der Strahlkopf 3 entlang der Nachbearbeitungslinie 18 verfahren, wobei der Strahlstrahl 16 von der der ersten Schneidposition D der vierten Trennprozedur entsprechenden ersten Nachbearbeitungsposition zu einer der zweiten Schneidposition E der vierten Trennprozedur entsprechenden zweiten Nachbearbeitungsposition verfahren wird.

In Figur 14 ist eine Situation gezeigt, in der das Werkstück 9 entlang des kompletten Schnittspalts 15 zwischen der der ersten Schneidposition D der vierten Trennprozedur entsprechenden ersten Nachbearbeitungsposition und der der zweiten Schneidposition E der vierten Trennprozedur entsprechenden zweiten Nachbearbeitungsposition nachbearbeitet wurde. Die vierte Nachbearbeitungsprozedur ist damit beendet.

Wie in Figur 15 veranschaulicht, wird nach Abschluss der vierten Nachbearbeitungsprozedur, ausgehend von der zweiten Schneidposition E der vierten Trennprozedur, die für die nun folgende fünfte Trennprozedur die erste Schneidposition darstellt, das Werkstück 9 weiter trennend bearbeitet, wobei der bereits erzeugte Teil des Schnittspalts 15 bis zur zweiten Schneidposition A der fünften Trennprozedur verlängert wird. Hierdurch wird das Werkstückteil vom Restgitter 10 freigeschnitten und kann entfernt werden. Es erfolgt keine Nachbearbeitung des Werkstücks 9 entlang des Teils des Schnittspalts 15, der bei der fünften Trennprozedur erzeugt wurde, da das Werkstückteil 11 bereits freigeschnitten wurde und am freigeschnittenen Werkstückteil 11 erfindungsgemäß keine Nachbearbeitung erfolgt.

In allen Trennprozeduren hat der Bearbeitungsstrahl 16 eine erste Leistungsdichte, die so bemessen ist, dass das Werkstück 9 durchtrennt wird. In allen Nachbearbeitungsprozeduren hat der Bearbeitungsstrahl 16 eine zweite Leistungsdichte, die so bemessen ist, dass das Werkstück 9 weder fügend noch trennend bearbeitet wird. Hierdurch wird das Werkstück 9 entlang des Schnittspalts 15 nachbearbeitet, wobei, je nach Anwendungsfall, das Werkstück 9 in einem eine werkstückteilseitige Schnittkante des Schnittspalts 15 enthaltenden Bereich und/oder in einem eine restgitterseitige Schnittkante des Schnittspalts 15 enthaltenden Bereich durch den Bearbeitungsstrahl 16 bestrahlt wird.

Die Strahlachse des Bearbeitungsstrahl 16 ist beispielsweise achsparallel zur konischen Strahldüse 13 und trifft senkrecht auf das Werkstück 9. In allen Trennprozeduren und allen Nachbearbeitungsprozeduren wird der Bearbeitungsstrahl 16 mit einer unveränderten Ausrichtung seiner Strahlachse relativ zur Werkstückoberfläche 17 (z.B. 90°) auf die Werkstückoberfläche 17 gerichtet.

Die Nachbearbeitungsprozeduren können in vielfältiger Weise variiert werden. Beispielsweise könnte die Nachbearbeitungslinie 18 seitlich versetzt (äquidistant) zur Schnittlinie 14 angeordnet sein. Beispielsweise könnten die erste Nachbearbeitungsposition und die zweite Nachbearbeitungsposition so positioniert sein, dass das Werkstück 9 nur entlang eines Teils des Schnittspalts 15 nachbearbeitet wird. Beispielsweise könnte die Richtung der Nachbearbeitung entgegengesetzt zur Richtung der Erzeugung des Schnittspalts 15 sein. Des Weiteren wäre es möglich, dass mehrere Nachbearbeitungsprozeduren für einen selben Teil des Schnittspalts 15 durchgeführt werden.

Wie insbesondere aus Figur 14 ersichtlich, wird bei der letzten Trennprozedur ein Teil des Schnittspalts 15 erzeugt, dessen Länge kleiner ist als die jeweiligen Längen der bei allen vorhergehenden Trennprozeduren erzeugten Teile des Schnittspalts 15. Durch diese Maßnahme kann erreicht werden, dass ein möglichst geringer Teil des Schnittspalts 15 keiner Nachbearbeitung unterzogen wird. Möglich wäre auch, dass die Längen der bei den Trennprozeduren erzeugten Teile des Schnittspalts 15, ausgehend vom Freischneidpunkt des Werkstückteils 11, beispielsweise kontinuierlich zunehmen.

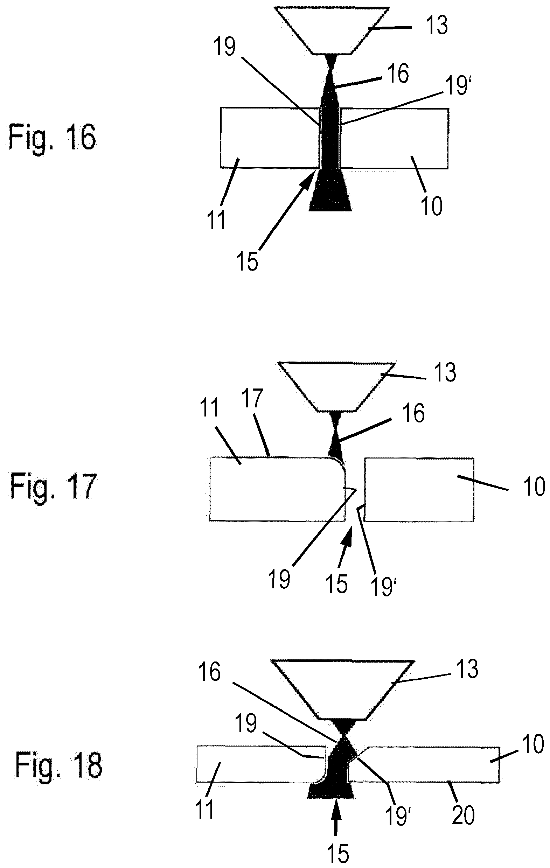

Es wird nun Bezug auf die Figuren 16 bis 21 genommen, in denen verschiedene Anwendungsfälle zur Nachbearbeitung des Werkstücks 9 in dem Verfahren gemäß der Figuren 1 bis 15 veranschaulicht sind.

In Figur 16 werden bei der Nachbearbeitung durch den Bearbeitungsstrahl 16 Oxidschichten von der werkstückteilseitigen Schnittkante 19 und der restgitterseitigen Schnittkante 19' des Schnittspalts 15 entfernt. Die Oxidschichten können gut durch Abplatzen entfernt werden. Der Bearbeitungsstrahl 16 dringt in den Schnittspalt 15 ein und ist so fokussiert, dass beide Schnittkanten 19, 19' bestrahlt werden. Die Nachbearbeitungslinie 18 kann identisch zur Schnittlinie 14 oder hiervon verschieden sein.

Bei der Konfiguration von Figur 16 kann nachfolgend zur Entfernung der Oxidschichten oder alternativ zur Entfernung der Oxidschichten eine Beschichtung (z.B. Zinkbeschichtung) auf die werkstückteilseitige Schnittkante 19 und die restgitterseitige Schnittkante 19' des Schnittspalts 15 aufgebracht werden. Dies ist in Figur 21 gezeigt, worin ein koaxial zum Bearbeitungsstrahl 16 geführter zweiter Arbeitsgasstrahl 23 anhand des darin transportierten Beschichtungsmaterials 24 (z.B. Zink) veranschaulicht ist. Das Beschichtungsmaterial 24 wird dem zweiten Arbeitsgasstrahl 23 zugefügt, welches beide Schnittkanten 19, 19' vorzugsweise vollständig bestrahlt, was zur Folge hat, dass sich das Beschichtungsmaterial 24 dort abscheidet und eine Beschichtung bildet (z.B. Zinkbeschichtung).

In Figur 17 wird bei der Nachbearbeitung durch den Bearbeitungsstrahl 16 die werkstückteilseitige Schnittkante 19 des Werkstückteils 11 angrenzend an die Werkstückoberfläche 17 durch Umschmelzen verrundet. Die Nachbearbeitungslinie 18 ist vorzugsweise relativ zur Schnittlinie 14 seitlich (z.B. äquidistant) versetzt angeordnet, wobei bevorzugt ist, wenn ein maximaler Abstand zwischen Nachbearbeitungslinie 18 und Schnittlinie 14 die halbe Schnittspaltbreite des Schnittspalts 15 zuzüglich des Radius des Strahlkegels des Bearbeitungsstrahls 16 an der Werkstückoberfläche 17 beträgt.

In Figur 18 wird bei der Nachbearbeitung durch den Bearbeitungsstrahl 16 gleichzeitig die werkstückteilseitige Schnittkante 19 angrenzend an die Werkstückunterseite 20 verrundet und die restgitterseitige Schnittkante 19' angrenzend an die Werkstückoberfläche 17 geglättet. Die Nachbearbeitungslinie 18 kann zur Schnittlinie gleich oder relativ zur Schnittlinie 14 seitlich (z.B. äquidistant) versetzt sein.

In Figur 19 wird bei der Nachbearbeitung durch den Bearbeitungsstrahl 16 die werkstückteilseitige Schnittkante 19 angrenzend an die Werkstückoberfläche 17 mit einer Fase 21 versehen. Die Nachbearbeitungslinie 18 ist relativ zur Schnittlinie 14 seitlich (z.B. äquidistant) versetzt. Hier erfolgt die Erzeugung der Fase 21 durch mehrere Schritte bzw. Nachbearbeitungsprozeduren, die am selben Teil des Schnittspalts 15 durchgeführt werden. Bei einer ersten Nachbearbeitungsprozedur wird das Werkstückteil 11 in einem die werkstückteilseitige Schnittkante 19 enthaltenden Bereich bestrahlt. Die Nachbearbeitungslinie 18 kann zur Schnittlinie gleich oder relativ zur Schnittlinie 14 seitlich (z.B. äquidistant) versetzt sein (in Richtung zum Werkstückteil). Dies kann gegebenenfalls ein- oder mehrmals wiederholt werden. Bei einer oder mehreren folgenden Nachbearbeitungsprozeduren wird die Nachbearbeitungslinie 18 noch weiter in Richtung zum Werkstückteil 11 bzw. über das Werkstückteil 11 versetzt, um die Fase 21 weiter weg von der werkstückteilseitigen Schnittkante 19 auszubilden. Hierbei wird die werkstückteilseitige Schnittkante 19 gegebenenfalls nicht mehr mitbestrahlt. Denkbar wäre auch, zunächst das Werkstückteil 11 so zu bestrahlen, dass ein nicht die werkstückteilseitige Schnittkante 19 enthaltender Bereich bestrahlt wird, gefolgt von einem stetigen Versetzen der Nachbearbeitungslinie 18 in Richtung des Schnittspalts 15, wobei schließlich die werkstückteilseitige Schnittkante 19 mitbestrahlt wird.

In Figur 20 wird bei der Nachbearbeitung durch den Bearbeitungsstrahl 16 gleichzeitig an der werkstückteilseitigen Schnittkante 19 angrenzend an die Werkstückunterseite 20 und an der restgitterseitigen Schnittkante 19' angrenzend an die Werkstückunterseite 20 jeweils Grat entfernt. Die Nachbearbeitungslinie 18 kann identisch zur Schnittlinie 14 oder hiervon verschieden sein. Die Fokuslage des Bearbeitungsstrahl 16 wird so eingestellt, dass die beiden Schnittkanten 19, 19' entsprechend bestrahlt werden.

Die verschiedenen Anwendungsfälle können einzeln oder in beliebigen Kombinationen vorgesehen sein, wobei hierzu zwei oder mehr Nachbearbeitungsprozeduren entlang eines selben Teils des Schnittspalts 15 oder entlang des kompletten Schnittspalts 15 durchgeführt werden.

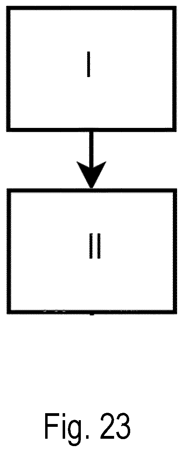

In Figur 23 ist ein Flussdiagramm des erfindungsgemäßen Prozesses gezeigt.

Das Verfahren umfasst mindestens eine Trennprozedur (Prozedur I) zum Erzeugen eines Schnittspalts entlang einer Schnittlinie, welche sich entlang der kompletten Kontur eines aus dem Werkstück herzustellenden Werkstückteils erstreckt, wobei die Trennprozedur umfasst: Verfahren eines zur Führung eines Bearbeitungsstrahl dienenden Strahlkopfs über dem Werkstück, wobei der Bearbeitungsstrahl entlang der Schnittlinie von einer ersten Schneidposition zu einer zweiten Schneidposition geführt wird, und wobei der Bearbeitungsstrahl eine erste Leistungsdichte hat, die so bemessen ist, dass das Werkstück durchtrennt wird. Anschließend wird mindestens eine Nachbearbeitungsprozedur (Prozedur II) zum Nachbearbeiten des Werkstücks entlang mindestens eines Teils des Schnittspalts durchgeführt, wobei die Nachbearbeitungsprozedur umfasst: Verfahren des Strahlkopfs über dem Werkstück, wobei der Bearbeitungsstrahl entlang einer Nachbearbeitungslinie von einer ersten Nachbearbeitungsposition zu einer zweiten Nachbearbeitungsposition geführt wird, wobei der Bearbeitungsstrahl eine zweite Leistungsdichte hat, die so bemessen ist, dass das Werkstück nicht durchtrennt wird, und wobei die Nachbearbeitungslinie einen solchen Verlauf hat, dass das Werkstück entlang mindestens eines Teils des Schnittspalts in einem eine restgitterseitige Schnittkante des Schnittspalts enthaltenden Bereich durch den Bearbeitungsstrahl bestrahlt wird, wobei eine Nachbearbeitungszone erzeugt wird.

Wie sich aus vorstehender Beschreibung ergibt, stellt die Erfindung einen neuartigen Strahlbearbeitungsprozess für ein platten- oder rohrförmiges Werkstück zur Verfügung, durch den ein Werkstückteil vollständig ausgeschnitten und das Restgitter entlang dem Schnittspalt einer Nachbehandlung durch den Bearbeitungsstrahl mit einer geringeren Leistungsdichte unterzogen wird. Dies macht eine mechanische Nachbehandlung des ausgeschnittenen Werkstückteils verzichtbar, so dass die Herstellung von Werkstückteilen einfacher, schneller und kostengünstiger erfolgen kann. Eine Implementierung des erfindungsgemäßen Prozesses in bereits bestehenden Strahlbearbeitungsvorrichtungen ist in einfacher Weise möglich, ohne hierfür aufwändige technische Maßnahmen vorsehen zu müssen. Vielmehr kann durch bloßen Eingriff in die Maschinensteuerung eine gewünschte Nachbearbeitung eines noch mit dem Restgitter verbundenen Werkstückteils bzw. des Restgitters selbst durch das erfindungsgemäße Verfahren realisiert werden.

### Bezugszeichenliste

- 1: Strahlbearbeitungsvorrichtung
- 2: Strahlschneideinrichtung
- 3: Strahlkopf
- 4: Arbeitstisch
- 5: Werkstückauflage
- 6: Querträger
- 7: Führungsschlitten
- 8: Bearbeitungsstrahlquelle
- 9: Werkstück
- 10: Restgitter
- 11: Werkstückteil
- 12: Steuereinrichtung
- 13: Strahldüse
- 14: Schnittlinie
- 15: Schnittspalt
- 16: Bearbeitungsstrahl
- 17: Werkstückoberfläche
- 18: Nachbearbeitungslinie
- 19, 19': Schnittkante
- 20: Werkstückunterseite
- 21: Fase
- 22: Nachbearbeitungszone
- 23: zweiter Arbeitsgasstrahl
- 24: Beschichtungsmaterial

## Patentansprüche

1. Prozess zur Strahlbearbeitung eines platten- oder rohrförmigen Werkstücks (9), umfassend
a) mindestens eine Trennprozedur zum Erzeugen eines Schnittspalts (15) entlang einer Schnittlinie (14), welche sich zumindest teilweise entlang der Kontur eines aus dem Werkstück (9) herzustellenden Werkstückteils (11) erstreckt, wobei die Trennprozedur umfasst: Verfahren eines zur Führung eines Bearbeitungsstrahls (16) dienenden Strahlkopfs (3) über dem Werkstück (9), wobei der Bearbeitungsstrahl (16) entlang der Schnittlinie (14) von einer ersten Schneidposition zu einer zweiten Schneidposition geführt wird, wobei der Bearbeitungsstrahl (16) eine erste Leistungsdichte hat, die so bemessen ist, dass das Werkstück durchtrennt wird, wobei das Werkstückteil (11) vollständig aus dem Werkstück (9) ausgeschnitten wird und ein Restgitter (10) des Werkstücks (9) verbleibt,
b) nach vollständigem Ausschneiden des Werkstückteils (11) mindestens eine Nachbearbeitungsprozedur zum Nachbearbeiten des Restgitters (10) entlang mindestens eines Teils des Schnittspalts (15), wobei die Nachbearbeitungsprozedur umfasst: Verfahren des Strahlkopfs (3) über dem Restgitter (10), wobei der Bearbeitungsstrahl (16) entlang einer Nachbearbeitungslinie (18) von einer ersten Nachbearbeitungsposition zu einer zweiten Nachbearbeitungsposition geführt wird, wobei der Bearbeitungsstrahl (16) eine zweite Leistungsdichte hat, die so bemessen ist, dass das Restgitter (10) nicht durchtrennt wird, und wobei das Restgitter (10) entlang mindestens eines Teils des Schnittspalts (15) in einem eine restgitterseitige Schnittkante (19) des Schnittspalts (15) enthaltenden Bereich vom Bearbeitungsstrahl (16) bestrahlt wird, **dadurch gekennzeichnet, dass**
bei der mindestens einen Nachbearbeitungsprozedur eine oder mehrere der folgenden Nachbehandlungen durchgeführt werden:
i) Entfernen einer Oxidschicht von der restgitterseitigen Schnittkante (19') des Schnittspalts (15),
ii) Entfernen von Grat von der restgitterseitigen Schnittkante (19') des Schnittspalts (15),
iii) Verrunden der restgitterseitigen Schnittkante (19') des Schnittspalts (15),
iv) Formändern, insbesondere Glätten oder Aufrauen, der restgitterseitigen Schnittkante (19') des Schnittspalts (15),
v) Erzeugen einer Fase (21) entlang des Schnittspalts (15),
vi) Beschichten des Restgitters (10) entlang des Schnittspalts (15) in einem die restgitterseitige Schnittkante (19') des Schnittspalts (15) enthaltenden Bereich mit einer in einem Arbeitsgasstrahl enthaltenen Substanz.

2. Prozess zur Strahlbearbeitung eines platten- oder rohrförmigen Werkstücks (9) nach Anspruch 1, bei welchem das Werkstückteil (11) durch eine einzige Trennprozedur vollständig aus dem Werkstück (9) ausgeschnitten wird.

3. Prozess zur Strahlbearbeitung eines platten- oder rohrförmigen Werkstücks (9) nach Anspruch 1, bei welchem das Werkstückteil (11) durch eine Mehrzahl Trennprozeduren vollständig aus dem Werkstück (9) ausgeschnitten wird.

4. Prozess zur Strahlbearbeitung eines platten- oder rohrförmigen Werkstücks (9) nach einem der Ansprüche 1 bis 3, bei welchem das Restgitter (10) durch die mindestens eine Nachbearbeitungsprozedur entlang des kompletten Schnittspalts (15) oder entlang nur eines Teils des Schnittspalts nachbearbeitet wird.

5. Prozess zur Strahlbearbeitung eines platten- oder rohrförmigen Werkstücks (9) nach einem der Ansprüche 1 bis 4, bei welchem entlang eines selben Teils des Schnittspalts (15) oder entlang des kompletten Schnittspalts (15) eine Mehrzahl von Nachbearbeitungsprozeduren durchgeführt werden.

6. Prozess zur Strahlbearbeitung eines platten- oder rohrförmigen Werkstücks (9) nach Anspruch 5, bei welchem zumindest zwei Nachbearbeitungsprozeduren, die für einen selben Teil des Schnittspalts (15) oder entlang des kompletten Schnittspalts (15) durchgeführt werden,
i) gleiche Nachbearbeitungslinien (18) und/oder gleiche Leistungsdichten des Bearbeitungsstrahls (16) aufweisen, oder
ii) verschiedene Nachbearbeitungslinien (18) und/oder verschiedene Leistungsdichten des Bearbeitungsstrahls (16) aufweisen.

7. Prozess zur Strahlbearbeitung eines platten- oder rohrförmigen Werkstücks (9) nach einem der Ansprüche 1 bis 6, bei welchem mindestens zwei Nachbearbeitungsprozeduren zum Nachbearbeiten des Werkstücks (9) entlang mindestens eines selben Teils des Schnittspalts (15) oder entlang des kompletten Schnittspalts (15) durchgeführt werden, wobei
(i) bei mindestens einer ersten Nachbearbeitungsprozedur das Werkstück (9) in einem eine restgitterseitige Schnittkante (19) des Schnittspalts (15) enthaltenden Bereich vom Bearbeitungsstrahl (16) bestrahlt wird, und
(ii) bei mindestens einer zweiten Nachbearbeitungsprozedur das Werkstück (9) in einem die restgitterseitige Schnittkante (19) des Schnittspalts (15) nicht enthaltenden Bereich vom Bearbeitungsstrahl (16) bestrahlt wird,
wobei die mindestens eine erste Nachbearbeitungsprozedur zeitlich vor der mindestens einen zweiten Nachbearbeitungsprozedur durchgeführt wird, oder die mindestens eine zweite Nachbearbeitungsprozedur zeitlich vor der mindestens einen ersten Nachbearbeitungsprozedur durchgeführt wird.

8. Prozess zur Strahlbearbeitung eines platten- oder rohrförmigen Werkstücks (9) nach einem der Ansprüche 1 bis 7, bei welchem zur Erzeugung einer Fase mehrere Nachbearbeitungsprozeduren entlang des kompletten Schnittspalts (15) durchgeführt werden, wobei die Nachbearbeitungslinie bei einer nachfolgenden Nachbearbeitungsprozedur weiter weg von der Schnittlinie versetzt ist als bei einer vorhergehenden Nachbearbeitungsprozedur, so dass der Bearbeitungsstrahl (16) weiter in das Restgitter (10) hinein versetzt wird.

9. Prozess zur Strahlbearbeitung eines platten- oder rohrförmigen Werkstücks (9) nach einem der Ansprüche 1 bis 8, bei welchem eine Ausrichtung des Bearbeitungsstrahls (16) relativ zum Restgitter (10) während der mindestens einen Nachbearbeitungsprozedur stets gleich ist zu einer Ausrichtung des Bearbeitungsstrahls (16) relativ zum Werkstück (9) während der mindestens einen Trennprozedur, insbesondere stets senkrecht zu einer Werkstückoberfläche (17) des platten- oder rohrförmigen Werkstücks (9).

10. Prozess zur Strahlbearbeitung eines platten- oder rohrförmigen Werkstücks (9) nach einem der Ansprüche 1 bis 8, bei welchem eine Ausrichtung des Bearbeitungsstrahls (16) relativ zum Restgitter (10) während der mindestens einen Nachbearbeitungsprozedur zumindest zeitweilig verschieden ist von einer Ausrichtung des Bearbeitungsstrahls (16) relativ zum Werkstück (9) während der mindestens einen Trennprozedur.

11. Prozess zur Strahlbearbeitung eines platten- oder rohrförmigen Werkstücks (9) nach einem der Ansprüche 1 bis 10, bei welchem die Nachbearbeitungslinie (18) der mindestens einen Nachbearbeitungsprozedur relativ zur Schnittlinie (14) seitlich versetzt ist.

12. Strahlbearbeitungsvorrichtung (1) mit einem von einem Strahlkopf (3) geführten Bearbeitungsstrahl (16), welche eine elektronische Steuereinrichtung (12) zur Steuerung der Strahlbearbeitung eines platten- oder rohrförmigen Werkstücks (9) aufweist, welche zur Durchführung des Prozesses nach einem der Ansprüche 1 bis 11 programmtechnisch eingerichtet ist.

13. Programmcode für eine zur Datenverarbeitung geeignete elektronische Steuereinrichtung für eine Strahlbearbeitungsvorrichtung (1) gemäß Anspruch 12, welcher Steuerbefehle enthält, die bei der Ausführung des Programms in der Steuereinrichtung (12) die Strahlbearbeitungsvorrichtung (1) nach Anspruch 12 zur Durchführung des Prozesses nach einem der Ansprüche 1 bis 11 veranlasst.

14. Computerlesbares Speichermedium, auf dem der Programmcode gemäß Anspruch 13 gespeichert ist.

## Claims

1. Process for the beam processing of a plate-shaped or tubular workpiece (9), comprising
a) at least one cutting procedure for producing a cutting gap (15) along a cutting line (14) which extends at least partially along the contour of a workpiece part (11) to be produced from the workpiece (9), the cutting procedure comprising: moving a beam head (3) for guiding a processing beam (16) above the workpiece (9), wherein the processing beam (16) is guided along the cutting line (14) from a first cutting position to a second cutting position, and wherein the processing beam (16) has a first power density which is dimensioned such that the workpiece is cut through, wherein the workpiece part (11) is completely cut out of the workpiece (9) and a residual grid (10) of the workpiece (9) remains,
b) after complete cutting out of the workpiece part (11), at least one finishing procedure for finishing the residual grid (10) along at least a part of the cutting gap (15), wherein the finishing procedure comprises: moving the beam head (3) over the residual grid (10), wherein the processing beam (16) is guided along a finishing line (18) from a first finishing position to a second finishing position, wherein the processing beam (16) has a second power density which is such that the residual grid (10) is not cut through, and wherein the residual grid (10) is irradiated by the processing beam (16) along at least a part of the cutting gap (15) in a region containing a residual grid-side cutting edge (19) of the cutting gap (15),
**characterized in that** one or more of the following finishing operations are carried out in the at least one finishing procedure:
i) removing an oxide layer from the residual grid-side cutting edge (19') of the cutting gap (15),
ii) removing burr from the residual grid-side cutting edge (19') of the cutting gap (15),
iii) rounding the residual grid-side cutting edge (19') of the cutting gap (15),
iv) changing the shape, in particular smoothing or roughening, of the residual grid-side cutting edge (19') of the cutting gap (15),
v) creating a chamfer (21) along the cutting gap (15),
vi) coating the residual grid (10) along the cutting gap (15) in a region containing the residual-grid-side cutting edge (19') of the cutting gap (15) with a substance contained in a working gas beam.

2. Process for the beam processing of a plate-shaped or tubular workpiece (9) according to claim 1, in which the workpiece part (11) is completely cut out of the workpiece (9) by a single cutting process.

3. Process for the beam processing of a plate-shaped or tubular workpiece (9) according to claim 1, in which the workpiece part (11) is completely cut out of the workpiece (9) by a plurality of cutting processes.

4. Process for the beam processing of a plate-shaped or tubular workpiece (9) according to any one of claims 1 through 3, in which the residual grid (10) is finished by the at least one finishing procedure along the complete cutting gap (15) or along only a part of the cutting gap (15).

5. Process for the beam processing of a plate-shaped or tubular workpiece (9) according to any one of claims 1 through 4, in which a plurality of finishing procedures is carried out along a same part of the cutting gap (15) or along the complete cutting gap (15).

6. Process for the beam processing of a plate-shaped or tubular workpiece (9) according to claim 5, in which at least two finishing procedures which are carried out for a same part of the cutting gap (15) or along the complete cutting gap (15)
i) have same finishing lines (18) and/or same power densities of the processing beam (16), or
ii) have different finishing lines (18) and/or different power densities of the processing beam (16).

7. Process for the beam processing of a plate-shaped or tubular workpiece (9) according to any one of claims 1 through 6, in which at least two finishing procedures are carried out for a same part of the cutting gap (15) or along the complete cutting gap (15) for finishing the workpiece (9), wherein
(i) in at least one first finishing procedure, the workpiece (9) is irradiated by the processing beam (16) in a region containing a residual grid-side cut edge (19) of the cutting gap (15), and
(ii) in at least one second finishing procedure, the workpiece (9) is irradiated by the processing beam (16) in a region not containing the residual grid-side cutting edge (19) of the cutting gap (15),
wherein the at least one first finishing procedure is carried out in time before the at least one second finishing procedure, or the at least one second finishing procedure is carried out in time before the at least one first finishing procedure.

8. Process for the beam processing of a plate-shaped or tubular workpiece (9) according to any one of claims 1 through 7, in which a plurality of finishing procedures is carried out along the complete cutting gap (15) to produce a chamfer, wherein the finishing line is offset further away from the cutting line in a subsequent finishing procedure than in a preceding finishing procedure, so that the processing beam (16) is offset further into the residual grid (10).

9. Process for the beam processing of a plate-shaped or tubular workpiece (9) according to any one of claims 1 to 8, in which an orientation of the processing beam (16) relative to the residual grid (10) during the at least one finishing procedure is always the same as an orientation of the processing beam (16) relative to the workpiece (9) during the at least one cutting procedure, in particular, is always perpendicular to a workpiece surface (17) of the plate-shaped or tubular workpiece (9).

10. Process for the beam processing of a plate-shaped or tubular workpiece (9) according to any one of claims 1 to 8, in which an orientation of the processing beam (16) relative to the residual grid (10) during the at least one finishing procedure is at least temporarily different from an orientation of the processing beam (16) relative to the workpiece (9) during the at least one cutting procedure.

11. Process for the beam processing of a plate-shaped or tubular workpiece (9) according to any one of claims 1 to 10, in which the finishing line (18) of the at least one finishing procedure is laterally offset relative to the cutting line (14).

12. Beam processing device (1) with a processing beam (16) guided by a beam head (3), which has an electronic control device (12) for controlling the beam processing of a plate-shaped or tubular workpiece (9), which is programmatically set up for carrying out the process according to one of claims 1 to 11.

13. Program code for an electronic control device suitable for data processing for a beam processing device (1) according to claim 12, which contains control commands which, upon executing the program in the control device (12), cause the beam processing device (1) according to claim 12 to carry out the process according to one of claims 1 to 11.

14. Computer-readable storage medium on which the program code according to claim 13 is stored.

## Revendications

1. Procédé de traitement par faisceau d'une pièce à usiner (9) en forme de plaque ou tubulaire, comprenant
a) au moins une procédure de coupe pour produire une fente de coupe (15) le long d'une ligne de coupe (14) qui s'étend au moins partiellement le long du contour d'une partie de la pièce à usiner (11) à produire à partir de la pièce à usiner (9), la procédure de coupe comprenant: le déplacement d'une tête de faisceau (3) pour guider un faisceau de traitement (16) au-dessus de la pièce à usiner (9), dans lequel le faisceau de traitement (16) est guidé le long de la ligne de coupe (14) d'une première position de coupe à une deuxième position de coupe, et dans lequel le faisceau de traitement (16) a une première densité de puissance qui est dimensionnée de manière à ce que la pièce à usiner soit découpée, dans lequel la partie de la pièce à usiner (11) est complètement découpée de la pièce à usiner (9) et une grille résiduelle (10) de la pièce à usiner (9) reste,
b) après le découpage complet de la partie de la pièce à usiner (11), au moins une procédure de finition pour finir la grille résiduelle (10) le long d'au moins une partie de la fente de coupe (15), dans laquelle la procédure de finition comprend: le déplacement de la tête de faisceau (3) sur la grille résiduelle (10), le faisceau de traitement (16) étant guidé le long d'une ligne de finition (18) d'une première position de finition à une seconde position de finition, le faisceau de traitement (16) ayant une seconde densité de puissance telle que la grille résiduelle (10) n'est pas coupée, et la grille résiduelle (10) étant irradiée par le faisceau de traitement (16) le long d'au moins une partie de la fente de coupe (15) dans une région contenant un bord de coupe côté grille résiduelle (19) de la fente de coupe (15),
**caractérisé par le fait qu'**une ou plusieurs des opérations de finition suivantes sont effectuées dans le cadre d'au moins procédure de finition:
i) éliminer d'une couche d'oxyde du bord de coupe côté grille résiduelle (19') de la fente de coupe (15),
ii) éliminer des bavures du bord de coupe côté grille résiduelle (19') de la fente de coupe (15),
iii) arrondir du bord de coupe côté grille résiduelle (19') de la fente de coupe (15),
iv) modifier la forme, en particulier lissage ou rugosité, du bord de coupe côté grille résiduelle (19') de la fente de coupe (15),
v) créer un chanfrein (21) le long de la fente de coupe (15),
vi) revêtir de la grille résiduelle (10) le long de la fente de coupe (15) dans une zone contenant le bord de coupe côté grille résiduelle (19') de la fente de coupe (15) avec une substance contenue dans un faisceau de gaz de travail.

2. Procédé de traitement par faisceau d'une pièce à usiner (9) en forme de plaque ou tubulaire selon la revendication 1, dans lequel la partie de la pièce à usiner (11) est entièrement découpée de la pièce à usiner (9) par une seule procédure de coupe.

3. Procédé de traitement par faisceau d'une pièce à usiner (9) en forme de plaque ou tubulaire selon la revendication 1, dans lequel la partie de la pièce à usiner (11) est complètement découpée de la pièce à usiner (9) par plusieurs procédures de coupe.

4. Procédé de traitement par faisceau d'une pièce à usiner (9) en forme de plaque ou tubulaire (9) selon l'une quelconque des revendications 1 à 3, dans lequel la grille résiduelle (10) est finie par au moins une procédure de finition le long de la fente de coupe complète (15) ou le long d'une partie seulement de la fente de coupe (15).

5. Procédé de traitement par faisceau d'une pièce à usiner (9) en forme de plaque ou tubulaire (9) selon l'une quelconque des revendications 1 à 4, dans lequel une pluralité de procédures de finition est effectuée le long d'une même partie de la fente de coupe (15) ou le long de la fente de coupe complète (15).

6. Procédé de traitement par faisceau d'une pièce à usiner (9) en forme de plaque ou tubulaire (9) selon la revendication 5, dans lequel au moins deux procédures de finition qui sont exécutées pour une même partie de la fente de coupe (15) ou le long de la fente de coupe complète (15)
i) ont les mêmes lignes de finition (18) et/ou les mêmes densités de puissance du faisceau de traitement (16), ou
ii) ont des lignes de finition (18) différentes et/ou des densités de puissance différentes du faisceau de traitement (16).

7. Procédé de traitement par faisceau d'une pièce à usiner (9) en forme de plaque ou tubulaire (9) selon l'une quelconque des revendications 1 à 6, dans lequel au moins deux procédures de finition sont exécutées pour une même partie de la fente de coupe (15) ou le long de la fente de coupe complète (15) pour la finition de la pièce (9), dans lequel
(i) dans au moins une première procédure de finition, la pièce (9) est irradiée par le faisceau de traitement (16) dans une région contenant un bord de coupe côté grille résiduelle (19) de la fente de coupe (15), et
(ii) dans au moins une deuxième procédure de finition, la pièce (9) est irradiée par le faisceau de traitement (16) dans une région ne contenant pas le bord de coupe côté grille résiduelle (19) de la fente de coupe (15),
dans lequel au moins une première procédure de finition est exécutée avant au moins une deuxième procédure de finition, ou dans lequel au moins une deuxième procédure de finition est exécutée avant au moins une première procédure de finition.

8. Procédé de traitement par faisceau d'une pièce à usiner (9) en forme de plaque ou tubulaire (9) selon l'une quelconque des revendications 1 à 7, dans lequel plusieurs procédures de finition sont exécutées le long de la fente de coupe complète (15) pour produire un chanfrein, la ligne de finition étant décalée plus loin de la ligne de coupe dans une procédure de finition ultérieure que dans une procédure de finition précédente, de sorte que le faisceau de traitement (16) est décalé plus loin dans la grille résiduelle (10).

9. Procédé de traitement par faisceau d'une pièce à usiner (9) en forme de plaque ou tubulaire (9) selon l'une quelconque des revendications 1 à 8, dans lequel une orientation du faisceau de traitement (16) par rapport à la grille résiduelle (10) au cours d'au moins une procédure de finition est toujours la même qu'une orientation du faisceau de traitement (16) par rapport à la pièce à usiner (9) au cours d'au moins une procédure de coupe, en particulier, est toujours perpendiculaire à une surface de la pièce (17) de la pièce à usiner (9) en forme de plaque ou tubulaire.

10. Procédé de traitement par faisceau d'une pièce à usiner (9) en forme de plaque ou tubulaire selon l'une quelconque des revendications 1 à 8, dans lequel une orientation du faisceau de traitement (16) par rapport à la grille résiduelle (10) au cours d'au moins une procédure de finition est au moins temporairement différente d'une orientation du faisceau de traitement (16) par rapport à la pièce à usiner (9) au cours d'au moins une procédure de coupe.

11. Procédé de traitement par faisceau d'une pièce à usiner (9) en forme de plaque ou tubulaire (9) selon l'une quelconque des revendications 1 à 10, dans lequel la ligne de finition (18) de l'au moins une procédure de finition est décalée latéralement par rapport à la ligne de coupe (14).

12. Dispositif de traitement par faisceau (1) avec un faisceau de traitement (16) guidé par une tête de faisceau (3), doté d'un dispositif de commande électronique (12) pour commander le traitement par faisceau d'une pièce en forme de plaque ou tubulaire (9), qui est programmé pour exécuter le processus selon l'une des revendications 1 à 11.

13. Code de programme pour un dispositif de commande électronique adapté au traitement des données pour un dispositif de traitement des faisceaux (1) selon la revendication 12, qui contient des commandes de contrôle qui, lors de l'exécution du programme dans le dispositif de commande (12), amènent le dispositif de traitement des faisceaux (1) selon la revendication 12 à exécuter le processus selon l'une des revendications 1 à 11.

14. Média de stockage lisible par ordinateur sur lequel est stocké le code de programme selon la revendication 13.
